(19)

Europäisches
Patentamt
European
Patent Office
Office européen
des brevets

(11) **EP 1 385 117 B1**

(12) **EUROPEAN PATENT SPECIFICATION**

(45) Date of publication and mention
of the grant of the patent:
**16.12.2009 Bulletin 2009/51**

(51) Int Cl.:
**G06K 9/00** (2006.01)     **H04L 9/32** (2006.01)
**G07F 7/10** (2006.01)

(21) Application number: **03291303.0**

(22) Date of filing: **30.05.2003**

(54) **Method and apparatus for transforming biometric data**

Verfahren und Vorrichtung zum Transformieren biometrischer Daten

Procédé et appareil de transformation des données biométriques

(84) Designated Contracting States:
**AT BE BG CH CY CZ DE DK EE ES FI FR GB GR
HU IE IT LI LU MC NL PT RO SE SI SK TR**

(30) Priority: **30.05.2002 US 157120
14.04.2003 US 412348**

(43) Date of publication of application:
**28.01.2004 Bulletin 2004/05**

(73) Proprietor: **ACTIVCARD IRELAND LIMITED
Dublin 2 (IE)**

(72) Inventors:
• **Hillhouse, Robert D.
Ottawa,
Ontario, K1Y OX6 (CA)**
• **Hamid, Laurence
Ottawa,
Ontario, K4A 1Z3 (CA)**

(74) Representative: **Grünecker, Kinkeldey,
Stockmair & Schwanhäusser
Anwaltssozietät
Leopoldstrasse 4
80802 München (DE)**

(56) References cited:
WO-A-00/51244     WO-A-00/65478
WO-A-01/90962     WO-A-03/003286

• DAVIDA G I ET AL: "ON ENABLING SECURE
APPLICATIONS THROUGH OFF-LINE
BIOMETRIC IDENTIFICATION" PROCEEDINGS
OF THE 1998 IEEE SYMPOSIUM ON SECURITY
AND PRIVACY. OAKLAND, CA, MAY 3 - 6, 1998,
IEEE SYMPOSIUM ON SECURITY AND PRIVACY,
LOS ALAMITOS, CA : IEEE COMPUTER SOC, US,
vol. CONF. 19, 3 May 1998 (1998-05-03), pages
148-157, XP000825837 ISBN: 0-7803-4994-6

**Description**

**Field of the Invention**

The invention relates to a biometric identification processes and more particularly to a method of hashing biometric data to render same less indicative of an original biometric information content.

**Background of the Invention**

Access systems are well known in the art of security. Most common access systems involve a step of comparing something from or of an individual with a reference value. For example, a well-known method of securing access involves providing a password to a data entry point. The password is then hashed and compared to a reference value. When the comparison indicates that the entered password was valid for access, then access is provided.

Hashing of the password before comparison with a reference value provides two benefits. Firstly, the value is obfuscated if it is to be provided via an unsecured path. Secondly, the reference value can be stored in a hashed fashion preventing access thereto from resulting in a security breach; anyone accessing the reference value only has access to the hashed value and not to the actual password.

In biometric registration, there is a considerable concern over access to biometric information. Since biometric information is treated as static -unchanging - information, it is important that the information is safeguarded from unauthorized access. Therefore, the above noted method is useful in biometric information characterization for preventing access to the biometric information itself.

Unfortunately, biometric information is not provided in a completely static fashion. Though a fingertip, for example, does not change substantially over the course of a day, each fingerprint captured is different. Sometimes, fingerprints are very different. Thus, hashing of a fingerprint is not as easily performed for supporting the same method as is known for use with passwords. In order to successfully support the same method, each fingerprint would essentially need to be captured identically - something that is impossible. Otherwise, each fingerprint must be processed to align it with the reference data in precise repeatable known fashion.

A common method of fingerprint alignment involves extracting an identifiable feature - commonly the core - and transforming the image such that the core is positioned and oriented in a predetermined manner. Then, all extracted and subsequently hashed feature data is comparable to the enrolled fingerprint data. Unfortunately, core alignment is not sufficiently accurate to support extremely reliable fingerprint recognition. An alternative solution for aligning fingerprint data is to provide the reference data in its raw form to the image capture system and then to overlay the images to ensure accurate alignment. Unfortunately, this is very limited since it provides the biometric information in an available fashion from the reference value storage medium Such methods are discussed in patent application WO 01/11577and WO 01/84494, both assigned to Precise Biometrics. In these references, methods are disclosed wherein a processor external to the smart card pre-processes biometric information to extract therefrom a small subset of the biometric information - a portion of an image of a fingerprint - in order to reduce the amount of processing required on a smart card processor.

In patent application WO 01/11577, it is disclosed to transmit a subset of biometric information in the place of a personal identification number (PIN) that is commonly used to access information stored on a smart card. In reality, the subset of biometric information becomes the new PIN and is merely a larger PIN that is more difficult to guess. That said, once the PIN is guessed successfully, security of the smart card is compromised and the device and method are rendered useless. Also, the use of a subset of, for example, a fingerprint image as a PIN is difficult, since fingerprints and other biometric information sources are not truly repeatably sensable.

In patent application WO 01/84494, it is disclosed to transmit to a first host processor a portion of the stored biometric information sample for use in alignment and subset extraction. A pre-processed subset is provided to a smart card, and only a small portion of the original data sensed from the biometric information sample of the authorized user requires processing on the smart card. The reduced amount of data for processing by the smart card processor results in a reduced processing time and, as such, enhances performance. Unfortunately, the data provided from the smartcard in fingerprint data and it is typically undesirable to freely distribute fingerprint data as public data.

The above-described limitations of the prior clearly indicate the need for a method, which allows for preprocessing of fingerprint data before a comparison with an enrollment template is made, but according to which no sensible or characteristic data is surrendered. Preferably, the information transmitted from a smart card to a host processor, when intercepted, does not contain any direct information regarding the enrolled fingerprint template.

**Summary of the Invention**

The invention is defined in the independent claims.

**Brief Description of the Drawings**

The invention will now be described with reference to the attached drawings in which:

Figure 1 is a simplified flow diagram of a prior art method of performing fingerprint identification;
Figure 2 is a simplified flow diagram of a prior art method of preprocessing a fingerprint image;
Figure 3 is a simplified flow diagram of a method of preprocessing a fingerprint image according to another embodiment of the instant invention;
Figure 4 is a schematic representation of a biometric fingerprint template;
Figure 5 is a simplified flow diagram of a method of preprocessing a fingerprint image according to another embodiment of the instant invention;
Figure 6 is a simplified flow diagram of a method of preprocessing a fingerprint image according to another embodiment of the instant invention;
Figure 6a is an example of three feature locations allowing for three orientations of an image;
Figure 7 is a simplified flow diagram of a method of preprocessing a fingerprint image according to another embodiment of the instant invention;
Figure 8 is a simplified flow diagram of a method of preprocessing a fingerprint image according to another embodiment of the instant invention;
Figure 9 is a simplified flow diagram of a method of preprocessing a fingerprint image according to another embodiment of the instant invention;
Figure 10 is a simplified flow diagram of a method of preprocessing a fingerprint image according to another embodiment of the instant invention;
Figure 11 is a simplified flow diagram of a method of preprocessing a fingerprint image according to another embodiment of the instant invention;
Figure 12 is a simplified flow diagram of a method of preprocessing a fingerprint image according to another embodiment of the instant invention.
Figure 13 depicts a schematic diagram of a prior art apparatus for use with the method according to the instant invention;
Figure 14 shows a flow chart illustrating a prior art method of biometric data alignment; and,
Figure 15 is a simplified flow diagram illustrating a method according to the instant invention for hashing biometric data.

**Detailed Description of the Invention**

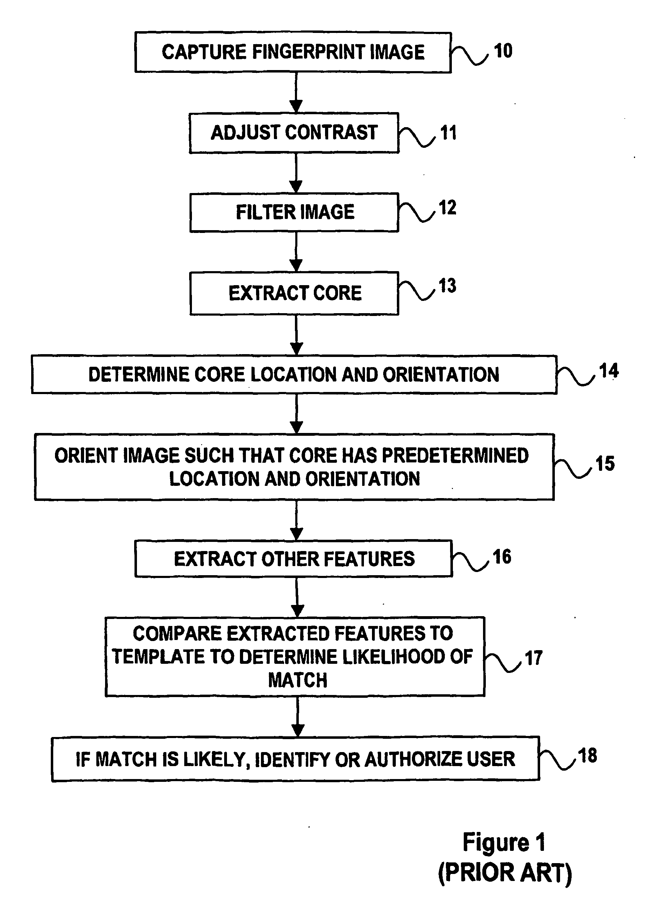

Referring to Figure 1, a prior art method of performing fingerprint identification is shown. A fingerprint is imaged in steps 10. The image is then filtered using image processing filtering techniques in step 12 and the contrast is adjusted to a normalized level in step 11. Once pre-processing of the image is completed, the image is in a standardized form for analysis.

The image is then analyzed in step 13 to determine a core feature or features. This feature is used to align the image in space and orientation in step 14 in order to allow for more accurate correlation with template data. Once oriented in step 15, the image is analyzed and features are identified for use in correlation in step 16. The features are compared to features in a stored template to determine a likelihood of a match in step 17. When a match is likely, a user identification or authorization is performed in step 18.

Though capturing of biometric image data is not an exact process and, as such, variations in the captured image often occur, feature alignment is a very likely cause of registration inaccuracies and variations. Thus, two images that are of an identical biometric information source and that contain identical information offset one from another in translation and rotation may not register exactly one against another. This results from small differences in image alignment even once image orientation has occurred.

Much of the processing that occurs during the analysis of the fingerprint is related to re-orienting the fingerprint for easier correlation and to feature identification.

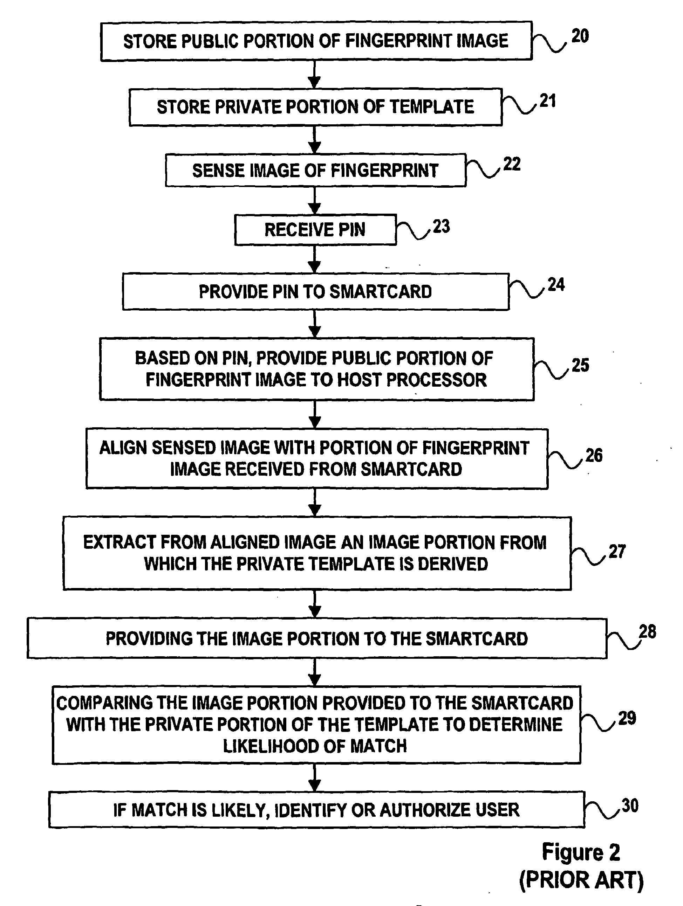

Referring now to Figure 2, shown is a prior art method of preprocessing a fingerprint image wherein biometric data is provided to the preprocessor from the smartcard in the form of a public portion of a template. For example, during a registration step (not shown), an authorized user of the smart card provides a fingertip having a fingerprint to an imaging device that is in communication with the smart card. The imaging device senses the topological features of the fingerprint and stores an image of the fingerprint template in memory of the smart card. The memory includes a public access portion for storing a public portion of the fingerprint image in step 20 and a private access portion for storing a private portion of the fingerprint image in step 21.

When the authorized user of the smart card wishes to be identified or recognized, the same fingertip is provided to an imaging device in step 22 of a host system in communication with the smart card, the fingerprint is imaged and stored electronically in a memory of the host system. The user provides a PIN to the host system in step 23 and the PIN is provided from the host system to the smart card in step 24. In dependence upon the PIN being verified, the smart card provides the public portion of the fingerprint image to a processor of the host system in step 25. The host processor aligns the sensed fingerprint image with the public portion of the fingerprint image that was provided from the smart card in step 26. The host processor then extracts from the aligned image an image portion from which the private template is derived in step 27. The image portion is provided to the smart card in step 28, where the smart card processor compares the image portion with the private portion of the template to determine a likelihood of a match in step 29. If a match is likely, the user is identified or recognized in step 30. If a match is other than likely, then the authorization attempt is rejected and the user is denied access.

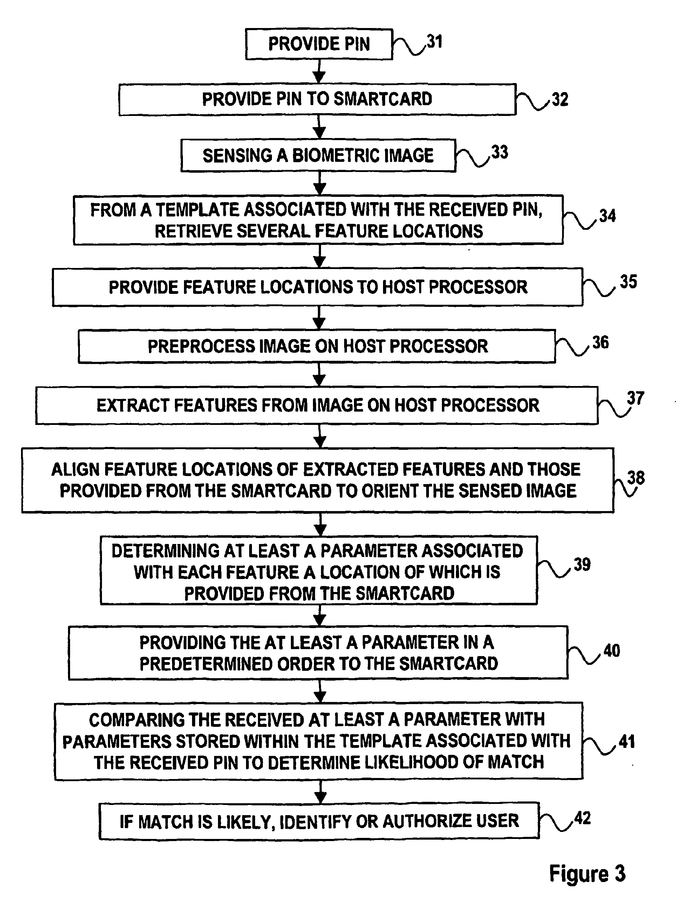

Referring now to Figure 3, a method of preprocessing a fingerprint image according to the instant invention is shown, wherein biometric data is not provided to a preprocessor, for instance a processor of a host system, from the smart card. As such, the process is alterable without suffering the drawbacks of the prior art methods. Further, as noted above, when fingerprint image data is provided from the smartcard, this reduces the security of the fingerprint registration system since correlation data is determinable from the data received from the smart card.

The user provides in step 31 a PIN to a host computer system in communication with the smart card, and the host computer provides the PIN to the smart card in step 32. Next, a fingerprint image of the user is captured using an imaging device of the host system in step 33. The image is filtered and the contrast is adjusted to a normalized level. The fingerprint image is then analyzed by the host processor to determine features thereof. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

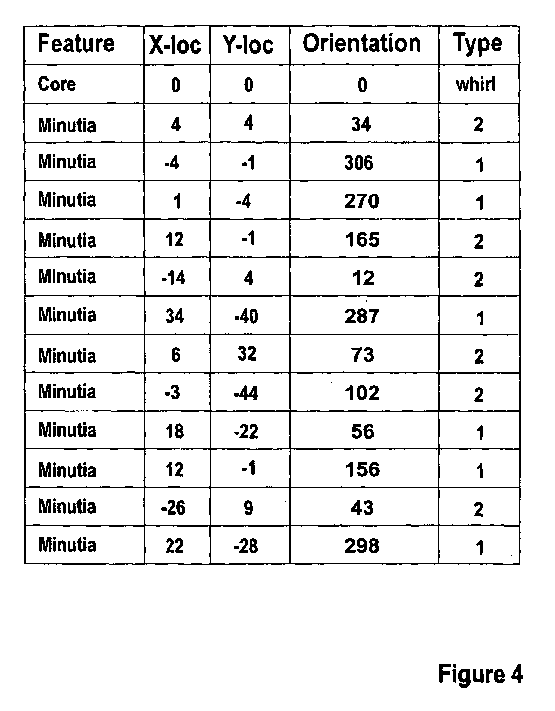

Thus, a typical biometric fingerprint template appears as shown in the diagram of Figure 4. Of course, other data formats and orders are possible. Further, it is possible to store the data in any form that allows extraction of the same information therefrom. For example, each minutia may be stored relative to a previous minutia without changing the information content of the template.

As is evident from Figure 4, the core is arbitrarily assigned the coordinate (0,0). The core orientation is assumed to be in the Y direction. The minutia are listed in order of distance from the core. About the core the minutia are denser than at a distance therefrom. The template of Figure 4 has 24 minutia listed. Though this is the case, often fingerprint analysis and recognition systems use far fewer minutia to perform an identification process.

Each minutia has a location expressed as a coordinate, has a direction expressed as an angle or as a slope, and has a type expressed in the template shown by a numeric identifier, each number indicative of a particular predetermined minutia type.

There is also an identifier indicating the fingerprint type, and the ridge flow angle at several locations. Of course other features are also known and could be extracted from a fingerprint image and stored within the template for later identification.

Thus, as noted with reference to Figure 1, the main processing tasks in biometric registration include, image processing to filter the image and, when necessary, scale and normalize the image; global feature identification; image rotation and translation relative to the global feature; feature extraction from the image; feature analysis and identification; feature correlation with template features. Of course when the template is an image, the step of feature analysis and identification is unnecessary and the step of correlation is more complex or less reliable.

Of the steps outlined above, feature correlation is the least processor intensive while global feature identification, image rotation, and feature extraction are the most processor intensive. That said, these are the processes that are typically performed by the correlating processor since only that processor has available thereto the data necessary for performing such a correlation.

Returning to Figure 3, the method provides for provision of challenge data relating to a template, the data other than image data of a biometric information source. For instance, in step 34 the smart card retrieves from the smart card memory a stored template that is associated with the received PIN, and retrieves a plurality of feature locations from the template. Of course, the feature locations need not be stored within the template. The plurality of locations is of identifiable features, preferably features having accurately identifiable locations.

A processor of the host system receiving in step 35 the challenge and an image of a biometric information source then uses the challenge data to orient the biometric information source relative thereto in step 36. This is performed by identifying features within the image in step 37, determining feature locations in step 38, and then moving the feature locations to overlap the provided locations in step 39 until a reasonable approximation of image positioning is achieved.

Once the image positioning is achieved, data relating to a plurality of features within the image are provided to the card for correlation in step 40. For example, the data relates to minutia locations and directions of the 12 minutia nearest the first point provided.

Thus the processor of the smart card need only compare a plurality of values to values within the template stored thereon in step 41 in order to form a registration measure for use in user authorization. Preferably, the comparison is not a fixed comparison to allow for missed minutia or extra minutia within a template. If a match is likely, the user is identified or recognized in step 42. If a match is other than likely, then the authorization attempt is rejected and the user is denied access.

Since feature locations are provided from the smartcard for aligning the image, it is possible to provide features at a significant distance one from another. As is known to those of skill in the art of image processing, the longer the distance between two points to be aligned, the more accurate the rotational alignment. Of course a third point is needed to differentiate between 180 degree rotations. Thus, by selecting feature locations at a distance one from another, the alignment accuracy is improved relative to alignment of image data based on a single feature - core - and its orientation.

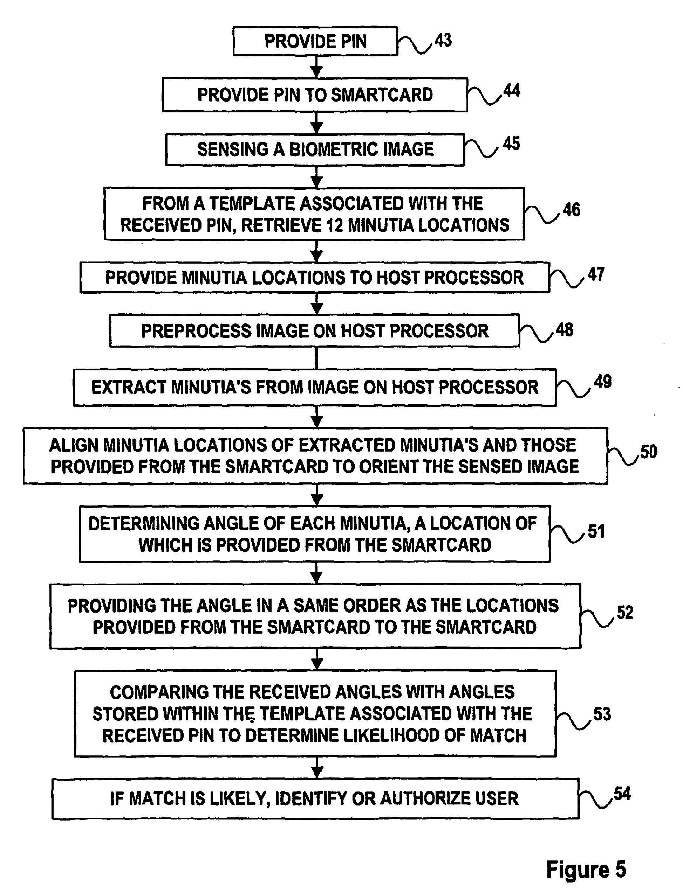

Referring to Figure 5, a more specific embodiment of the method of Figure 3 is shown. The user provides in step 43 a PIN to a host computer system in communication with the smart card, and the host computer provides the PIN to the smart card in step 44. Next, a fingerprint image of the user is captured using an imaging device of the host system in step 45. The smart card retrieves 12 minutia locations from a stored template, which template is associated with the provided PIN in step 46. Of course any number of minutia locations are optionally provided. The 12 minutia locations are provided from the smart card to the processor of the host system in step 47. It is evident to those of skill in the art that from a plurality of minutia locations, little or nothing is determinable about the minutia types or directions. Further, little or nothing is determinable about the fingerprint such as type, ridge flow angles, core location - since there are insufficient minutia to accurately identify the denser cluster about the core - and so forth. As such, the minutia locations themselves are insufficient to provide information for statistical estimation of image features.

The captured fingerprint is filtered and the contrast is adjusted to a normalized level in step 48. The image is then analyzed by the host processor to determine features thereof, and minutia locations are extracted in step 49. The captured fingerprint image is then aligned by the host processor with the 12 minutia locations provided from the smart card, in order to spatially and rotationally orient the image in step 50. Once completed, the processed image is located in direct correlation to the template data. Advantageously, such a process obviates a need for core identification, extraction, and orientation.

The processed image is then analyzed by the host processor to extract data relating to each minutia provided in step 51. For each minutia extracted, a minutia direction, for instance an angle, is returned as is a minutia type. The host processor provides the angles and types to the smart card, in a same order as the locations were provided from the smart card to the host processor in step 52. The smart card processor then compares the angle returned for each minutia to an angle stored within the template data and the minutia types to known minutia types stored within the template to determine if a match between the captured fingerprint image and the template data is likely in step 53. If a match is likely, the user is identified or recognized in step 54. If a match is other than likely, then the authorization attempt is rejected and the user is denied access.

Of note, when the angle is provided with 12 degree increments and there are 8 minutia types, only one byte of data is provided to the smartcard for each minutia. Thus, in the above example only 12 bytes are provided thus minimizing data transfer to the smartcard and correlation processing thereby. Also, the minutia direction is correlatable to a grid angle allowing for storage of minutia with only a few bits.

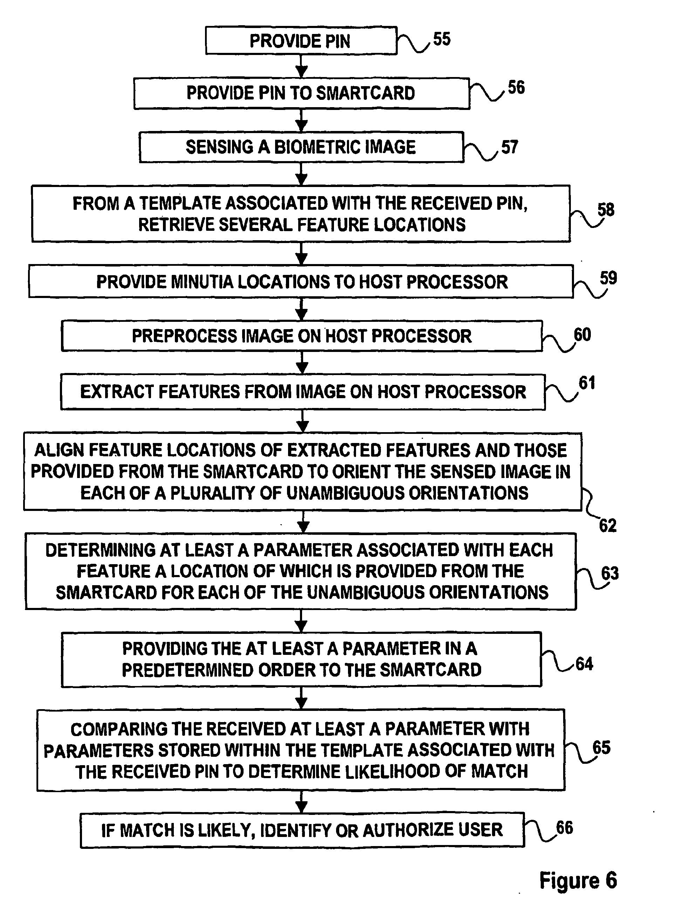

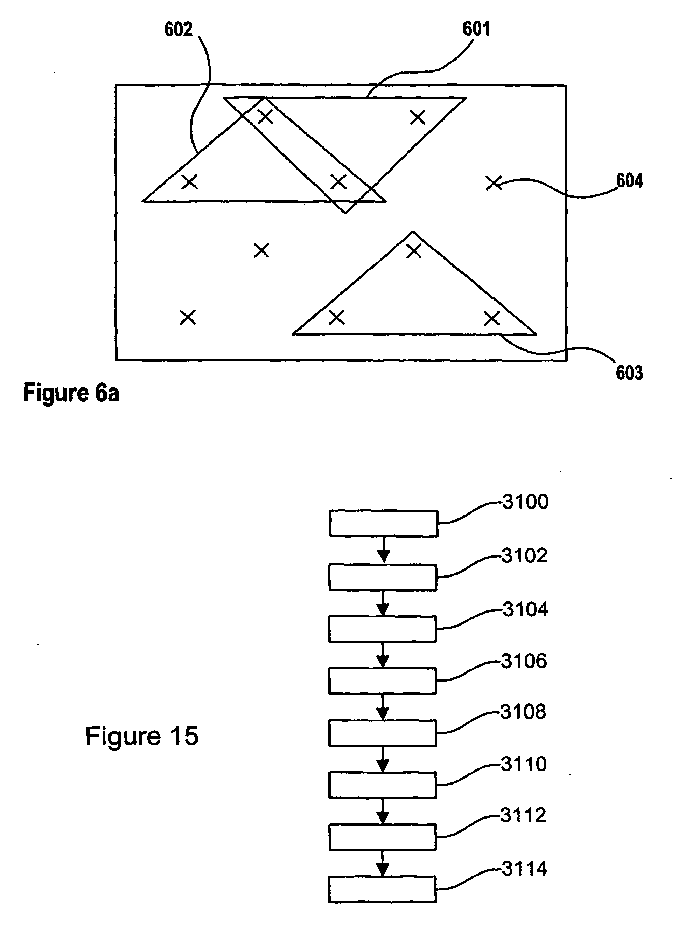

Referring now to Figure 6 a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

The user provides in step 55 a PIN to a host computer system in communication with the smart card, and the host computer provides the PIN to the smart card in step 56. Next, a fingerprint image of the user is captured using an imaging device of the host system in step 57. The image is filtered and the contrast is adjusted to a normalized level. The fingerprint image is then analyzed by the host processor to determine features thereof. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

The method of Figure 6 provides for provision of challenge data relating to a template, the data other than image data of a biometric information source. For instance, the smart card retrieves from the smart card memory a stored template that is associated with the received PIN, and retrieves a plurality of feature locations from the template in step 58. The plurality of locations is of identifiable features, preferably features having accurately identifiable locations.

A processor of the host system receiving in step 59 the challenge and an image of a biometric information source then uses the challenge data to orient the biometric information source in step 60 relative thereto in each of a plurality of unambiguous orientations. This is performed by identifying features within the image in step 61, determining feature locations in step 62, and then moving the feature locations to overlap the provided locations until a reasonable approximation of image positioning is achieved for each of the unambiguous orientations in step 63. For example, three feature locations 601, 602 and 603 are provided which allows for, in this example, three orientations of the image of Figure 6a. Thus, for each orientation, features 604 are differently positioned one relative to another. There are three unambiguous alignments though it is ambiguous which of the three is actually the intended alignment.

Once the image positioning is achieved, data relating to a plurality of features within the image for each one of the plurality of unambiguous orientations are provided to the smart card in a predetermined order for correlation in step 64. For example, the data relates to minutia locations and directions of the 12 minutia nearest the first point provided. Alternatively, the data may relate only to the features at the locations provided.

Optionally, only one of the data sets relating to a single alignment is used in the step of correlation.

Thus the processor of the smart card need only compare a plurality of values to values within the template stored thereon in order to form a registration measure for use in user authorization in step 65. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 66. If a match is other than likely, then the authorization attempt is rejected and the user is denied access.

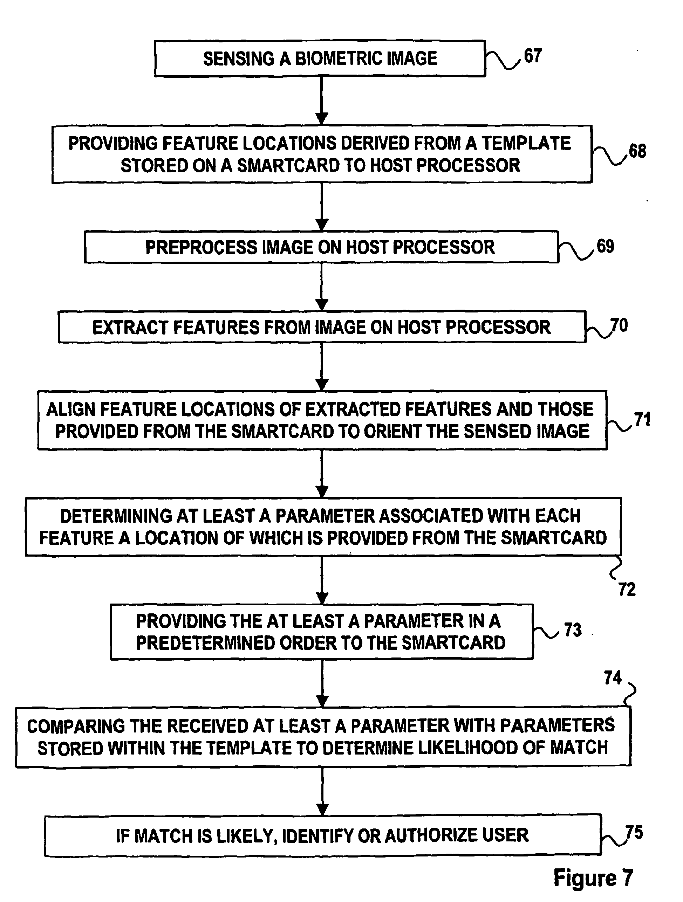

Referring now to Figure 7, a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 67. Features locations derived from a template stored on a smart card are provided to the host processor in step 68. The image is filtered and the contrast is adjusted to a normalized level in step 69. The fingerprint image is then analyzed by the host processor to determine features thereof, in step 70. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations.

A processor of the host system receiving the challenge and an image of a biometric information source then uses the challenge data to orient the biometric information source relative thereto in step 71. This is performed by identifying features within the image, determining feature locations, and then moving the feature locations to overlap the provided locations until a reasonable approximation of image positioning is achieved in step 72.

Once the image positioning is achieved, data relating to a plurality of features within the image are provided to the smart card in a predetermined order for correlation in step 73. For example, the data relates to minutia locations and directions of the 12 minutia nearest the first point provided.

Thus the processor of the smart card need only compare a plurality of values to values within the template stored thereon in order to form a registration measure for use in user authorization in step 74. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 75. If a match is other than likely, then the authorization attempt is rejected and the user is denied access.

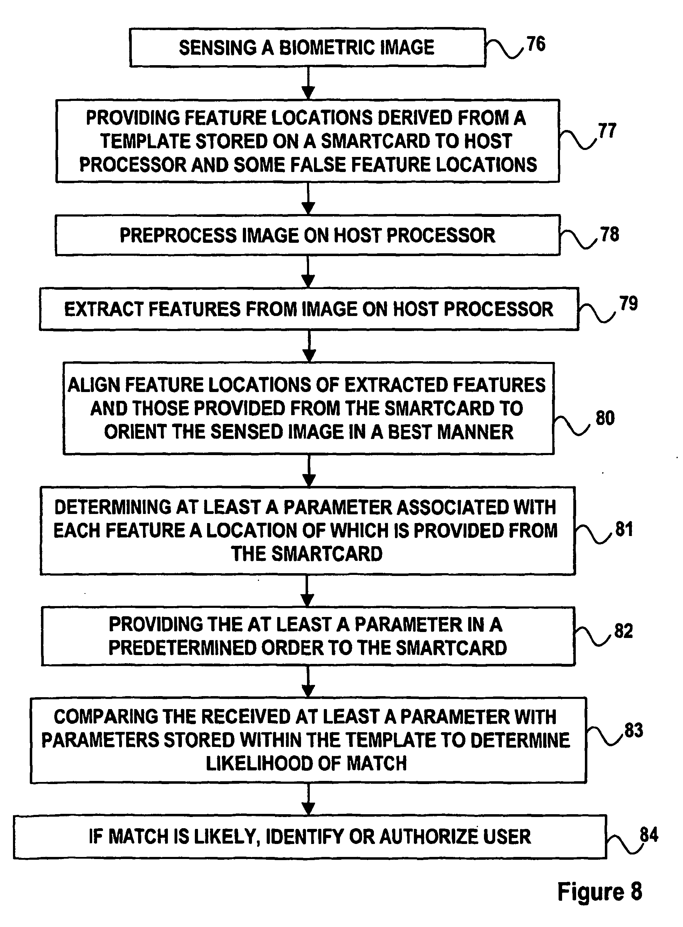

Referring now to Figure 8 a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 76. Feature locations derived from a template stored on a smart card and some false feature locations are provided to the host processor in step 77. The image is filtered and the contrast is adjusted to a normalized level in step 78. The fingerprint image is then analyzed by the host processor to determine features thereof in step 79. Typically features of fingerprints include ridge flow angle, minutia locations, minutia types, minutia directions, core location, core orientation, and so forth. Of course, in order for any of the feature locations to have meaning, they all must be expressed within a global reference frame; this global reference frame includes position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations. According to the method of Figure 8, the smart card further provided at least a false feature location, for instance a location that does not correspond to a location of a minutia point.

A processor of the host system receiving the challenge and an image of a biometric information source then uses the challenge data to orient the biometric information source relative thereto and in a best manner in step 80. This is performed by identifying features within the image, determining feature locations, and then moving the feature locations to overlap the provided locations until a reasonable approximation of image positioning is achieved in step 81.

Once the image positioning is achieved, data relating to a plurality of features within the image are provided to the smart card in a predetermined order for correlation in step 82. For example, the data relates to minutia directions and types for the feature locations provided. Of course, when the feature location is a false feature location, no such data is determinable. As such, even less information relating to the fingerprint data is provided.

Thus the processor of the smart card need only compare a plurality of values to values within the template stored thereon in order to form a registration measure for use in user authorization in step 83. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 84. If a match is other than likely, then the authorization attempt is rejected and the user is denied access.

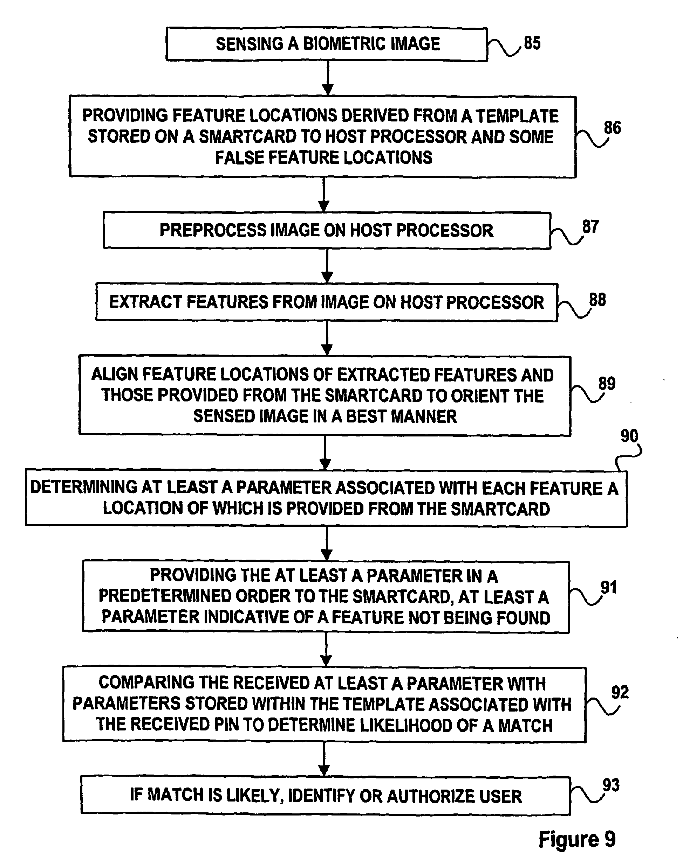

Referring now to Figure 9, a method of preprocessing a fingerprint image according to the instant invention is shown, wherein biometric data in the form of a public portion of a template is not provided to a preprocessor, for instance a processor of a host system, from the smart card. As such, the process is alterable without suffering the drawbacks of the prior art methods.

A fingerprint image of the user is captured using an imaging device of the host system in step 85. Feature locations derived from a template stored on a smart card and some false feature locations are provided to the host processor in step 86. The image is filtered and the contrast is adjusted to a normalized level in step 87. The fingerprint image is then analyzed by the host processor to determine features thereof in step 88. Typically features of fingerprints include ridge flow angle, minutia locations, minutia types, minutia directions, core location, core orientation, and so forth in step 89. Of course, in order for any of the feature locations to have meaning, they all must be expressed within a global reference frame; this global reference frame includes position and orientation is often related to the core location and orientation.

The method provides for provision of challenge data relating to a template, the data other than image data of a biometric information source. For instance, the smart card retrieves from the smart card memory a stored template, and retrieves a plurality of feature locations from the template. The plurality of locations is of identifiable features, preferably features having accurately identifiable locations. According to the method of Figure 9, the smart card further provided at least a false feature location, for instance a location that does not correspond to a location of a minutia point.

A processor of the host system receiving the challenge and an image of a biometric information source then uses the challenge data to orient the biometric information source relative thereto and in a best manner. This is performed by identifying features within the image, determining feature locations, and then moving the feature locations to overlap the provided locations until a reasonable approximation of image positioning is achieved in step 90.

Once the image positioning is achieved, data relating to a plurality of features within the image are provided to the smart card in a predetermined order for correlation in step 91. For example, the data relates to minutia locations and directions of the 12 minutia nearest the first point provided. In addition, the data includes an indication that no feature was extracted at the at least a false feature location. This information is used to verify the accuracy of the information received from the host processor.

Thus the processor of the smart card need only compare a plurality of values to values within the template stored thereon and to expected values for those features that are not present within the fingerprint image in order to form a registration measure for use in user authorization in step 92. Preferably, the comparison is not a fixed comparison to allow for missed minutia or extra minutia within a template. Further preferably, the template accounts for differing orders of minutia in the above example due to inaccuracies in core locating that may occur. If a match is likely, the user is identified or recognized in step 93. If a match is other than likely, then the authorization attempt is rejected and the user is denied access.

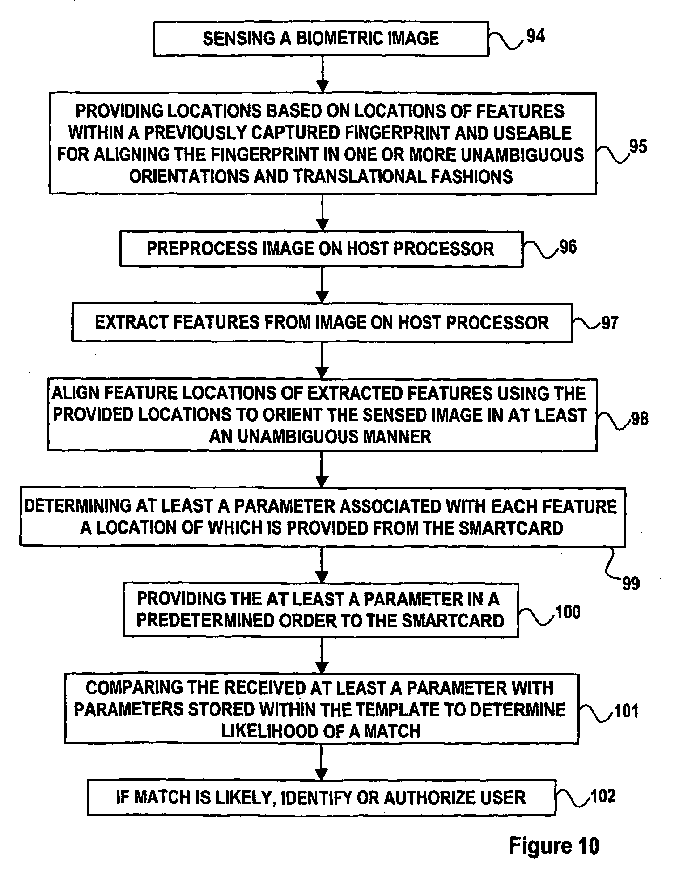

Referring now to Figure 10, a method of preprocessing a fingerprint image according to the instant invention is shown, absent a step of providing biometric data to a processor of a host system, from the smart card.

A fingerprint image of the user is captured using an imaging device of the host system in step 94. The image is filtered and the contrast is adjusted to a normalized level in step 96. Locations based on locations of features within a previously captured fingerprint and useable for aligning the fingerprint in one or more unambiguous orientations and translational fashions are provided in step 95. The fingerprint image is then analyzed by the host processor to determine features thereof in step 97. Typically features of fingerprints include ridge flow angle, minutia locations, minutia types, minutia directions, core location, core orientation, and so forth in step 98. Of course, in order for any of the features to have meaning, they all must be related to a global position; this global position and orientation is often related to the core location and orientation.

Next, the host processor receives from the smartcard a plurality of locations relative to feature locations associated with the template to which the fingerprint data is to be registered. Thus, the locations may be 4 pixels to the right and 3 pixels below each feature location. The plurality of locations is a known offset and direction from identifiable features, preferably features having accurately identifiable locations. Of course, the known offset is preferably predetermined though it could also be dynamic in nature requiring synchronization between the smartcard and the host or provided from the smartcard to the host. The host processor uses the extracted feature locations to orient the captured fingerprint image relative to the provided locations. This is performed by identifying features within the image, determining feature locations, and then moving the feature locations to overlap feature locations determined relative to the provided locations until a reasonable approximation of image positioning is achieved in step 99.

Once the image positioning is achieved, data relating to a plurality of features within the image are provided in a predetermined order to the smart card for correlation in step 100. For example, the data relates to minutia directions and types of features offset from the locations provided.

Thus the processor of the smart card need only compare a plurality of values to values within a template stored thereon in order to form a registration measure for use in user authorization in step 101. Preferably, the comparison is not a fixed comparison to allow for missed minutia or extra minutia within a template. If a match is likely, the user is identified or recognized in step 102. If a match is other than likely, then the authorization attempt is rejected and the user is denied access.

Advantageously, such a method permits different offsets to be applied to different provided feature locations thereby obfuscating any feature related data that may be determined from the data provided.

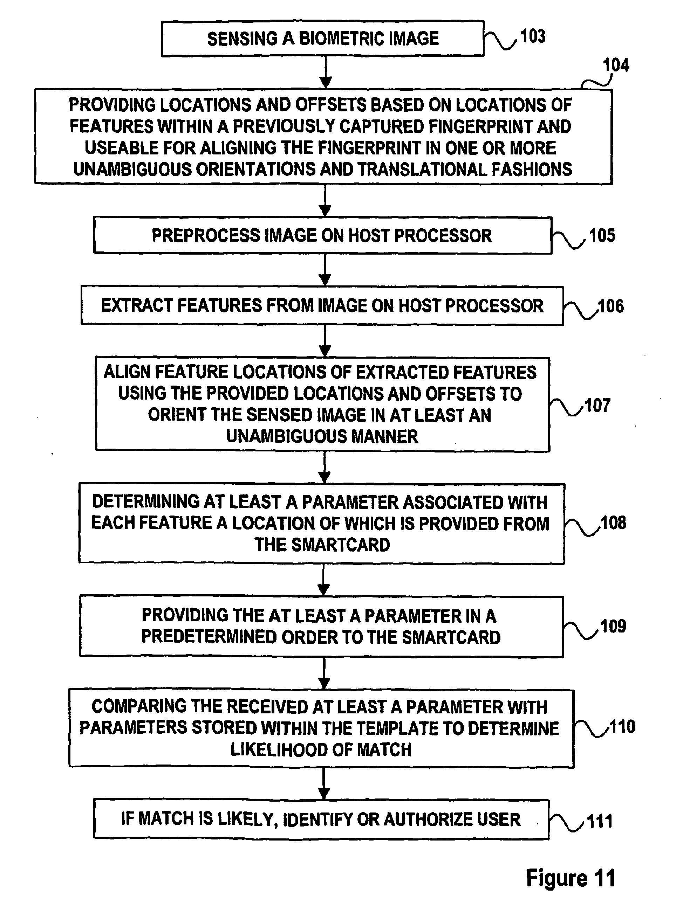

Referring now to Figure 11, a method of preprocessing a fingerprint image according to the instant invention is shown, absent a step of providing biometric data to a processor of a host system, from the smart card.

A fingerprint image of the user is captured using an imaging device of the host system in step 103. Locations and offsets based on locations of features within a previously captured fingerprint and useable for aligning the fingerprint in one or more unambiguous orientations and translational fashions are provided in step 104. The image is filtered and the contrast is adjusted to a normalized level in step 105. The fingerprint image is then analyzed by the host processor to determine features thereof in step 106. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor receives from the smartcard a plurality of locations relative to feature locations associated with the template to which the fingerprint data is to be registered. Thus, the locations may be 4 pixels away from each feature location. The plurality of locations is a known offset from identifiable features, preferably features having accurately identifiable locations. Of course, the known offset is preferably predetermined though it could also be dynamic in nature requiring synchronization between the smartcard and the host or provided from the smartcard to the host in step 107. The host processor uses the extracted feature locations and directions to orient the captured fingerprint image relative to the provided locations. This is performed by identifying features within the image, determining feature locations and orientations, and then determining an image orientation such that the points the known offset from the features along the feature direction overlap the locations provided in step 108.

Of course, other data extractable from the features is also useful in determining the direction. Alternatively, the direction is known but the feature angle or type is used to determine an offset to the provided location.

Once the image positioning is achieved, data relating to a plurality of features within the image are provided in a predetermined order to the smart card for correlation in step 109. For example, the data relates to minutia directions and types of features offset from the locations provided.

Thus the processor of the smart card need only compare a plurality of values to values within a template stored thereon in order to form a registration measure for use in user authorization in step 110. Preferably, the comparison is not a fixed comparison to allow for missed minutia or extra minutia within a template. If a match is likely, the user is identified or recognized in step 111. If a match is other than likely, then the authorization attempt is rejected and the user is denied access.

In accordance with yet another embodiment of the invention there is provided a method wherein locations relating to feature locations but not providing any useful information relating to the biometric image is proposed. Here, similar to the method of Figure 11, instead of feature locations, locations determinable from features and their locations are provided. However, unlike the method of Figure 10, here the offset of the feature locations are determined and applied on the smartcard. This eliminates drawbacks of the method of Figure 10. For example, if two different radii were used with a same individual, the two resulting circles, when plotted, have two intersections, which limits feature locations to two locations. As such, instead of a feature lying on a circle, it is now within one of two points. A third radius would likely result in knowledge of the feature location.

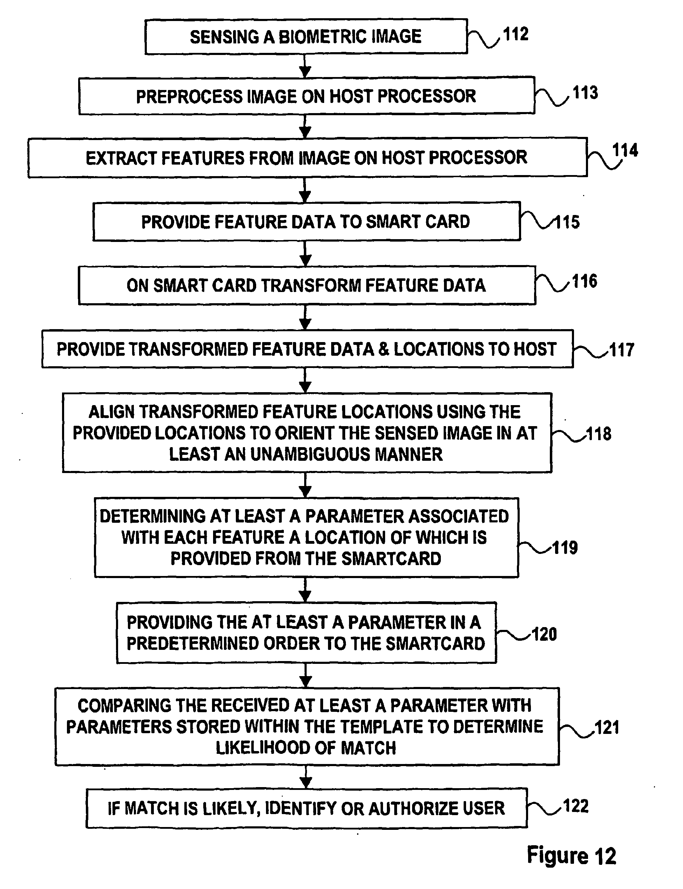

Referring now to Figure 12, a method of preprocessing a fingerprint image according to the instant invention is shown, absent a step of providing biometric data to a processor of a host system, from the smart card.

A fingerprint image of the user is captured using an imaging device of the host system in step 112. The image is filtered and the contrast is adjusted to a normalized level in step 113. The fingerprint image is then analyzed by the host processor to determine features thereof in step 114. Typically features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor provides to the smartcard data relating to the extracted features in step 115. For example, feature location and directions are provided. The smartcard applies a transform to each feature location in step 116. Since the direction of each feature is provided, the smartcard can use this information in applying the transform. As such, application of radius and angle offsets to each feature location is possible with a reasonable amount of computation. The transformed feature locations are returned to the host processor in step 117 along with a plurality of alignment locations in step 118. Of course, changing radii or angle or feature quality on which these are based is now possible without divulging information on the feature locations of features within the template in step 119. Further, the alignment problem for the host processor is a straightforward alignment process since the feature locations and the alignment locations are known at the outset and need not be redetermined for different potential alignments as is the case for the method of Figure 11.

Thus, the transformed feature locations may be 4 pixels away from each feature location and the alignment locations are similarly 4 pixels from each feature location. Once the image positioning is achieved, data relating to a plurality of features within the image are provided in a predetermined order to the smart card for correlation in step 120. For example, the data relates to minutia directions and types of features offset from the locations provided.

Thus the processor of the smart card need only perform a simple transform for each feature location received and compare a plurality of values to values within a template stored thereon in order to form a registration measure for use in user authorization in step 121. Preferably, the comparison is not a fixed comparison to allow for missed minutia or extra minutia within a template. If a match is likely, the user is identified or recognized in step 122. If a match is other than likely, then the authorization attempt is rejected and the user is denied access.

Advantageously, such a method permits different offsets and/or directions to be applied to different features based on the features themselves in performing image alignment. This obfuscates any feature related data that may be determined from the data provided. This also makes alignment of the image data very difficult absent knowledge of the process and the image contents.

Alternatively, with the alignment data is provided a frame within which to provide image data or data relating to features therein. As such, though twelve (12) minutia locations are provided. Once the image is aligned to the minutia locations, a sub-image within a provided frame is analyzed for features and their types and orientations - angles. Thus, only a portion of the image is used for each correlation. Advantageously, the portion used for correlation can be arbitrarily moved between correlation processes to prevent record playback attacks and to prevent interception of useful image related feature data.

Similarly, the location data is movable. For example, within a template twelve feature locations are stored for each of 20 different rotations of the image. The results for those feature locations are also stored for each of the 20 different orientations. Thus, each time a same individual attempts to gain access, a different set of locations is provided and a different result is expected. Of course, selection from any number of available features further complicates the reverse engineering and/or hacking of such a system. Optionally, instead of storing each permutation on the smartcard with the template, they are calculated in parallel to the host processor determining the values based on the acquired image. Thus, the smartcard processing is no longer a bottleneck within the critical path of the authentication process and can now support any number of rotational angles and translations for any number of features.

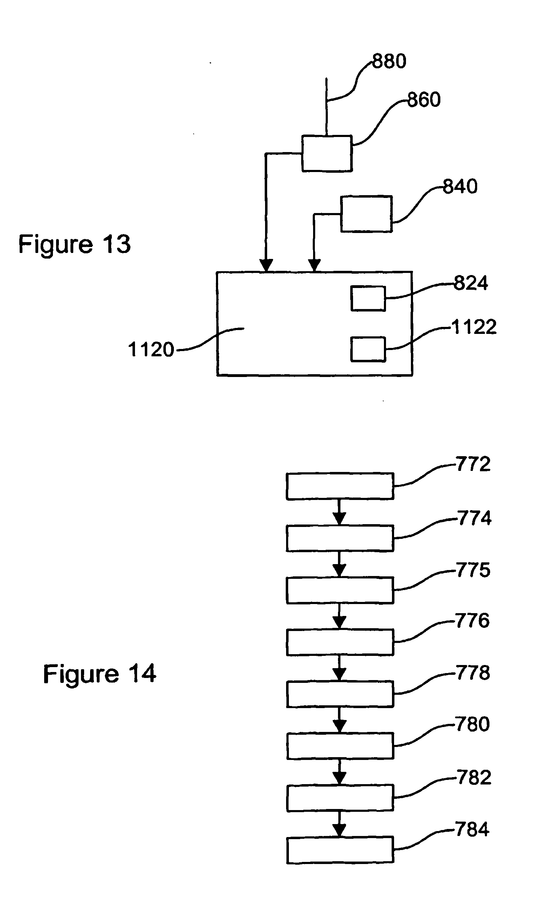

Referring now to Figure 13, shown is a prior art fingerprint identification system for applying the method according to the instant invention. A host processor 1120 comprising a central processing unit 1122 and random access memory 824 is coupled to a biometric sensor 840 and a smart card reader 860. The smart card reader is for receiving a smart card 880, and establishing a connection between the host processor 1120 and the smart card. The biometric sensor 840 senses a fingerprint, and fingerprint data is transmitted to the host processor 1120. The host processor contains software for pre-processing fingerprint data according to data received from the smart card 880 inserted into the smart card reader, and for communicating the pre-processed fingerprint data to the smart card. Alternatively, the smart card reader 860 and the biometric sensor 840 are a same device.

With reference to Figure 14, shown is a flow chart for a method of fingerprint identification with pre-processing of live fingerprint data according to the prior art. In step 772, a live biometric sample in the form of a fingerprint is sensed by the sensor 840 and is provided to the host processor 1122. The host processor 1122 is in communication with smart card 880 via smart card reader 860. The smart card 880 comprises biometric template data stored therein. Biometric template data in the form of type and location of minutiae within a selected area of the fingerprint - usually about the core of the fingerprint, are transmitted from the smart card 880 to the host processor 1122, step 774. The host processor 1122 pre-processes the live fingerprint sample by filtering the image to reduce effects of noise, step 775. Then, the live fingerprint sample is processed by the processor 1122 to determine a frame of reference common to the live fingerprint sample and the biometric template, step 776. The processor 1122 then extracts characteristic features from the live fingerprint sample, step 778, the extracted characteristic features within the known frame of reference. At step 780, the extracted features and the template features are compared, and it is determined whether or not the features of the live fingerprint sample match the features of the biometric template stored on the smart card, step 782. When a match is determined within predetermined limits, the individual providing the live fingerprint sample is authenticated at step 784.

According to the method illustrated in Figure 14, the smart card 880 surrenders the biometric template stored on the smart card. When the feature information within the template are received by the host processor 1122, a third party with access to the host processor 1122 obtains sufficient information to reconstruct within statistical limits portions of an image of the fingerprint sample, for which data are stored on the smart card 880. This greatly increases risks associated with a breach in security. Should a third party gain access to secure data such as encryption keys within a smart card 880, the data within the smartcard are no longer secure.

According to the method illustrated in Figure 14, the smart card surrenders information corresponding to a portion of biometric sample. When this information, for example a portion of the biometric sample or a plurality of feature locations are received by the host processor 1122, a third party with access to the host processor 1122 obtains sufficient information to reconstruct within statistical limits portions of an image of the fingerprint, for which data are stored on the smart card. This greatly increases risks associated with a breach in security. Should a third party gain access to secure data such as encryption keys within a smart card, the data within the smartcard are no longer secure.

Performing a biometric comparison on a smart card rather than using a PIN is desirable since it provides a stronger binding of the card to the user. Due to the computation and memory constraints of smart cards, however, the amount of processing operations on the biometric data that are possibly and conveniently performed on a smart card is limited. Therefore, match-on-card (MOC) systems typically rely on other processors, such as host processors, to do some pre-processing of the data relevant for a final match. Public data delivered by a smart card to a host processor allows the host processor to perform operations beyond template creation from a live sample, including for example alignment or selection of features to be sent to the smart card for final matching.

A problem associated with today's MOC systems is that public data is either part of an enrollment template, or it provides information about features stored within the enrollment template. In either case, the amount of template information that can be used for matching is reduced, since it is possibly derived from the public data or determinable therefrom and is therefore not sufficiently secure for matching purposes. When considering the structure of public data, it is evident that public data is either part of the enrollment template, or it is not part of the enrollment template. Methods relating to public data being part of the enrollment template are well known in the prior art. In particular, the above-cited patent applications assigned to Precise Biometrics disclose methods in which the public data is part of the enrollment template. The instant invention relates to a method of generating public data that is not part of an enrollment template, and that is yet secure since it does not surrender valuable fingerprint data.

A general approach to this problem includes applying a hash function $F$ to template data. Scope and type of suitable hash functions $F$ however is limited, due to the absence of an absolute coordinate system. Features of an enrollment fingerprint template as well as of a live fingerprint template exist within their own local reference frames. A hash function $F$ applied to a set of data in one reference frame will produce entirely different results when applied to the same set of data in another reference frame. In many cases a hash function $F$ is unusable for fingerprint matching even when the reference frames of the live fingerprint template and enrollment fingerprint template differ only slightly.

In accordance with yet another embodiment of the invention there is provided a method wherein locations relating to feature locations but not providing substantial information relating to the biometric image is proposed. Unfortunately, for the above hashing technique with a radius and angle, if two different radii were used with a same individual, the two resulting circles, when plotted, have two intersections, which limits feature locations to two locations. As such, instead of a feature lying on a circle, it is now within one of two points. A third radius would likely result in knowledge of the feature location.

Referring back to Figure 12, the method of preprocessing a fingerprint image according to the instant invention is briefly recapitulated, absent a step of providing biometric data to a processor of a host system, from the smart card.

A fingerprint sample is formed by capturing a fingerprint image of the user using an imaging device of the host system in step 112. The image is filtered and the contrast is adjusted to a normalized level in step 113. The fingerprint image is then analyzed by the host processor to determine features thereof in step 114. Typically, features of fingerprints include ridge flow angle, minutia locations, minutia types, minutia directions, core location, core orientation, and so forth. Of course, in order for any of the features to have meaning, they all must be related to a global position; this global position and orientation is often related to the core location and orientation.

Next, the host processor provides to the smartcard data relating to the extracted features in step 115. For example, feature location and directions are provided. The smartcard applies a transform to each feature location in step 116. Since the direction of each feature is provided, the smartcard can use this information in applying the transform. As such, application of radius and angle offsets to each feature location is possible with a reasonable amount of computation. The transformed feature locations are returned to the host processor in step 117 along with a plurality of alignment locations in step 118. Of course, changing radii or angle or feature quality on which these are based is now possible without divulging information on the feature locations of features within the template in step 119. Further, the alignment problem for the host processor is a straightforward alignment process since the feature locations and the alignment locations are known at the outset and need not be redetermined for different potential alignments as is the case for the method of Figure 12.

Thus, the transformed feature locations may be 4 pixels away from each feature location and the alignment locations are similarly 4 pixels from each feature location. Once the image positioning is achieved, data relating to a plurality of features within the image are provided in a predetermined order to the smart card for correlation in step 120. For example, the data relates to minutia directions and types of features offset from the locations provided.

Thus the processor of the smart card need only perform a simple transform for each feature location received and compare a plurality of values to values within a template stored thereon in order to form a registration measure for use in user authorization in step 121. Preferably, the comparison is not a fixed comparison to allow for missed minutia or extra minutia within a template. If a match is likely, the user is identified or recognized in step 122. If a match is other than likely, then the authorization attempt is rejected and the user is denied access.

Advantageously, such a method permits different offsets and/or directions to be applied to different features based on the features themselves in performing image alignment. This obfuscates any feature related data that may be determined from the data provided. This also makes alignment of the image data very difficult absent knowledge of the process and the image contents.

The instant invention is preferably used in connection with biometric identification systems. In an embodiment, a matching operation is performed on a smart card that contains an enrollment template of a fingerprint. However, the instant invention is not restricted to use with smart cards, but equally applies to server based biometric systems. In general, the method is practiced on systems including comparison processors, like the ones within a smart card, as well as other processors such as host processors, the other processors using the public data to process a live fingerprint sample.

According to the method of the instant invention, a reference frame is determined implicitly by the entity processing or pre-processing a live biometric sample. The reference frame is either global in nature for the biometric sample or is local to features within the biometric sample. In an embodiment, as described above, parameters of a hash function are dependent on feature characteristics such as direction, type, etc. In a further embodiment, the hash function or its parameters are dependent on a selected feature. Therefore, a hash function F is effectively used for secure fingerprint matching. Since it is possible to implicitly determine reference frames using the biometric sample, the method according to the instant invention allows also complicated hash functions to be used, thereby decreasing the possibility for determining the biometric template contents, from the public.

In the following, various examples of hash functions F generated from a biometric template, referred to as reference template, are now described. Let Ref be the set of reference template features, the set containing minutia Mi. Further, the pair (Xi, Yi) refers to a location of minutia i, (Ai) refers to a direction of minutia I, and (Ti) refers to a type of minutia i. If F is a hash function then public data PD are expressed as hash function of the set of reference features: PD = F {Ref}.

A typical hash function F1 that is known in the prior art takes as its arguments minutia Mi as well as two random numbers s and t. F1 then generates a random offset of the minutia location:

$$F_1(M_i, s, t) = (X_i + s \cdot \cos(A_i + t), Y_i + s \cdot \sin(A_i + t)) \qquad (1)$$

A key to implementation of the hash function $F_1$ is a missing frame of reference, leading to the problems as discussed above. A solution to this problem is the use of a particular minutia $M_k$ as internal reference frame for hash functions. Typically one $M_k$ is selected to calculate the hash function F from the enrollment fingerprint template. However, to calculate the proper hash function F for the live fingerprint template, a plurality of possible Mk values for a live fingerprint template is applied, and a best alignment is determined. As this is performed by the host processor, the additional processing is not significant. The best alignment is typically determined by comparing a set of n provided minutia data $M_n$, which are provided as transformed data $M_n'$ where $M_n' = F(M_n)$, with a set of transformed corresponding calculated minutia data $(M_{calc})_n'$ for the live fingerprint template. Typically, a best alignment is determined by minimizing goodness functions G, such as $G = \sum_j^n \left| (M_{calc})_j' - M_j' \right|$ or $G = \sum_j^n \left( (M_{calc})_j' - M_j' \right)^2$. Here, Mi is to be interpreted as minutia vector Mi = (Xi, Yi, Ai). The minutia vector typically has three components, but alternatively has fewer or more than three components. The minutia corresponding to $(M_{calc})'_k$ resulting in a best alignment is used for the hash function F when applied to the live fingerprint template features.

Various hash functions F with internal reference are possible. It is advantageous to incorporate into the hash function F the difference r between the $i^{th}$ minutia Mi and a particular reference minutia $M_r$, $r = |Mi - Mr|$. Two representative hash functions F2 and F3 are defined as follows:

$$F_2(M_i, M_r) = (X_i + r \cdot \cos(A_i), Y_i + r \cdot \sin(A_i)) \tag{2}$$

$$F_3(M_i, M_r) = (X_i + r \cdot \cos(A_i - A_r), Y_i + r \cdot \sin(A_i - A_r)) \tag{3}$$

$F_2$ is derived from the known function $F_1$ by replacing the random number s by the difference r and setting the random number t equal to zero, whereas $F_3$ is derived from the known function $F_1$ by replacing the random number s by the difference r and setting the random number t equal to the direction of the reference minutia $A_r$. Clearly, both functions $F_2$ and $F_3$ implicitly provide a relation to the reference minutia Mr.

Instead of using the trigonometric functions sine and cosine as constructs for a hash function F, one is free to choose any arbitrary function R as hash modifier. Particularly, functions that take differences involving the reference minutia are suitable for use in the method of the instant invention. In the following, RX is an arbitrary function of the difference $X_i$-$X_k$, RY is an arbitrary function of the difference $Y_i$-$Y_k$, and RA is an arbitrary function of the difference $Ai$-$A_k$. Given these definitions, hash functions $F_4$ and $F_5$ are defined as follows:

$$F_4(M_i, M_r) = (X_i + RX, Y_i + RY) \tag{4}$$

$$F5(M_i, M_r) = (X_i + RX, Y_i + RY, A_i + RA) \tag{5}$$

According to hash function F4, minutia locations are presented to the host processor in an obfuscated fashion, whereas according to hash function F5, minutiae locations as well as minutiae directions are presented to the host processor in an obfuscated fashion.

In another example of a hash function, a frame of reference is not provided by a minutia Mr, but rather by a general reference feature, such as a base direction D. Let s be a random number, replacement with the random number t in $F_1$ by D results in hash function $F_6$:

$$F_6(M_i, s, D) = (X_i + s \cdot \cos(A_i + D), Y_i + s \cdot \sin(A_i + D)) \tag{6}$$

The host processor evaluates a goodness function G for a plurality of D values. For example the trial D values are chosen between 0° and 360° being spaced apart by increments of 1°. The D value resulting in the smallest value for G is the chosen for the final alignment. It is emphasized that D is not known a priori to the host computer, but is determined according to a well-defined computational procedure.

It is apparent to one of skill in the art that simpler or more complex hashing methods as well as varied hashing methods are supported according to the invention. Of course, since hashing for alignment purposes is typically only performed by the host processor, which is typically quite powerful, complexity of the hashing method is of lesser concern than obfuscation provided thereby. Further, complex determinations requiring many hashing attempts and alignment attempts are possible so long as the amount of processing time by the host processor is kept below an expected wait time of a user. For example, ½ second appears to be acceptable to most user providing adequate time to perform many complex operations on a 2.4GHz Pentium® processor. For example, each feature may be hashed by a function of its characteristic and a characteristic of a nearby feature or features. Thus, a search space results to find accurate alignment depending on which nearby features are used in the function. Of course, one of skill in the art will appreciate that erroneous features - either present or absent - may affect suitability of some hashing functions for the purposes of the present invention.

The method according to the instant invention provides a substantial safety feature so that when data delivered by a smart card relate to data within a biometric template, the data does not provide inferential value to a third party intercepting the data other than for the purpose the data is provided for.

Referring to Figure 15, a simplified flow diagram of an embodiment of the invention is shown. A smart card having a biometric template stored therein in the form of a fingerprint template is provided to a host processing system, step 3100. Typically, the fingerprint template is stored as a collection of data referring to location, orientation, and type of characteristic features thereof. Typically, data for twenty or more characteristic features are stored within the template. A set of characteristic features for alignment are selected, step 3102. With reference to Table 1, the data corresponding to the selected alignment features are depicted. The set of selected alignment features is typically a subset of all characteristic features stored on the smart card.

Table 1

| # | FEATURE | X-LOC | Y-LOC | ORIENTATION | TYPE |
|---|---------|-------|-------|-------------|------|
| 1 | Minutia | 0 | 0 | 0 | 0 |
| 2 | Minutia | 4 | 4 | 30 | 2 |
| 3 | Minutia | -4 | -1 | 300 | 1 |
| 4 | Minutia | 1 | -4 | 270 | 1 |

For each feature, information is stored for a set of two ordinates, an orientation, as well as a feature type. The feature type information is preferably coded, a "0" indicating a bend, a "1" indicating an end, a "2" indicating a bifurcation, and so forth.

In step 3104, an internal reference is selected. Depending on a hash function, the internal reference is either a minutia Mr (hash functions $F_2$, $F_3$, $F_4$, $F_5$), feature dependent, or a general reference such as a base direction D (hash function $F_6$). Data for the set of selected alignment features is transformed according to a hash function using reference data. For example, one of the hash functions $F_2$, $F_3$, $F_4$, $F_5$ or $F_6$ is used. The transformed data are then transmitted to a host processor, step 3106. Information about a type of hash function is either stored in memory of the host processor or is transmitted from the smart card to the host processor. The host processor hashes a biometric sample to reconstruct a best hash function based on the set of transformed data received from the smart card, step 3108. For example, in case of using a hash function F6, the host processor hashes the live fingerprint sample accordingly to determine an alignment between the two sets of hashed data. This provides a known frame of reference, step 3110. Then, the data for the features of the live fingerprint sample within the known frame of reference are transferred to the smart card, step 3112. On the smart card, the received data are compared to the template data, step 3114, and it is determined whether the two sets of data are sufficiently matched.

Advantageously, given a known hash function and a live fingerprint template, it is possible to perform the hash function to result in hashed public data. As such, the above-described hash functions allow for transmission of public data for use in alignment, the public data other than actual feature coordinates but feature coordinates are determinable therefrom in the presence of a matching fingerprint sample. Thus, absent the correct fingerprint, little useful information is available from the co-ordinate data. That said, with the correct fingerprint data, the information is sufficient for the task for which it is provided.

It is clear to one of skill in the art that, based on the above disclosure, the method is applicable to retinal scans, palmprints, pore based biometric authentication techniques, and any other image and feature based correlation methods.

In the above example, the method according to the instant invention is described with reference to a MOC system using a smart card. It is understood that a smart card comprises memory for storing data, an interface for communicating and exchanging data with other devices, as well as a processor for manipulating stored data. The method according to the instant invention is not restricted to MOC systems. For example, public data are possibly used in server-based authentication systems where one or more host processors - workstations - perform processing of the biometric sample with the public data prior to transmitting the processed data to a server

## Claims

1. A method of biometric information processing comprising the steps of:

   - receiving biometric data relating to at least a biometric information sample;
   - extracting feature data relating to each of a plurality of features of the biometric data;

- transforming (3104, 3110) feature data of at least two of the plurality of features according to a transformation function F, resulting in transformed feature values, **characterized in that** said transformation function is dependent upon at least the value of a characteristic of each respective feature.

2.  A method according to claim 1, comprising:

- providing a first storage medium;
- storing data relating to the plurality of features within the storage medium; and,
- storing data relating to the transformed features within the storage medium.

3.  A method according to claim 2, wherein storage medium comprises a smartcard.

4.  A method according to claim 2, wherein storage medium comprises a secure authentication server.

5.  A method according to any of the preceding claims, wherein the biometric information sample comprises a fingerprint.

6.  A method according to any of the preceding claims, comprising the steps of:

storing the transformed features as public template data; and,
storing data relating to the feature data as private template data in a secure storage medium,
wherein the public data is for provision to an external processor for use in aligning a live biometric sample with the private template data.

7.  A method according to any of the preceding claims, wherein the transformation function is a function of a selected internal reference feature, the internal reference feature included in the plurality of biometric features.

8.  A method according to any of the preceding claims, wherein the transformation function is a function dependent upon a characteristic of each feature other than a location thereof.

9.  A method according to any of the preceding claims, wherein the plurality of features include fingerprint minutia.

10. A method according to claim 9, wherein the transformation function is a function of a location of the fingerprint minutia and at least one of an orientation and a type of the fingerprint minutia.

11. A method according to any of claims 1 to 10, wherein the transformation function F is of the form:

$$F( Mi, r, t) = (Xi + r*\cos( Ai + t ), Yi + r*\sin( Ai + t ))$$

Where

r and t are random parameters;
Mi represent Minutia i;
(Xi, Yi) be the location of Minutia i; and
(Ai) be the direction of Minutia i.

12. A method according to any of claims 1 to 10, wherein the transformation function F is of the form:

$$F(Mk, Mi) = (Xi + ri * \cos( Ai ), Yi + ri * \sin( Ai ) )$$

Where:

Mk is a particular minutia taken as an internal reference frame;
ri = |Mk - Mi|;
Mi represent Minutia i;

(Xi, Yi) be the location of Minutia i; and
(Ai) be the direction of Minutia i.

**13.** A method according to any of claims 1 to 10, wherein the transformation function F is of the form:

$$F(Mk, Mi) = (Xi + ri * \cos(Ai - Ak), Yi + ri * \sin(Ai - Ak))$$

Where:

Mk is a particular minutia taken as an internal reference frame;
ri = |Mk - Mi|;
Mi represent Minutia i;
(Xi, Yi) be the location of Minutia i; and
(Ai) be the direction of Minutia i.

**14.** A method according to any of claims 1 to 10, wherein the transformation function F is of the form:

$$F(Mk, Mi) = (Xi + Rx, Yi + Ry)$$

Where:

Mk is a particular minutia taken as internal reference frame;
Rx is an arbitrary function of Xi- Xk;
Ry is an arbitrary function of Yi- Yk;
Mi represent Minutia i; and,
(Xi, Yi) be the location of Minutia i.

**15.** A method according to any of claims 1 to 10, wherein the transformation function F is of the form

$$F(Mk, Mi) = (Xi + Rx, Yi + Ry, Ai + A)$$

Where:

Mk is a particular minutia taken as internal reference frame;
Rx is an arbitrary function of Xi- Xk;
Ry is an arbitrary function of Yi- Yk;
A is an arbitrary function of Ai- Ak;
Mi represent Minutia i;
(Xi, Yi) be the location of Minutia i; and
(Ai) be the direction of Minutia i.

**16.** A method according any of claims 1 to 10, wherein the transformation function F is of the form:

$$F(Mi, r, D) = (Xi + r*\cos(Ai + D), Yi + r*\sin(Ai + D))$$

Where:

r and t are random parameters;
D is a predefined base direction;
Mi represent Minutia i;

(Xi, Yi) be the location of Minutia i; and

(Ai) be the direction of Minutia i.

17. A method of biometric identification, comprising:

providing a first storage medium having biometric template data stored thereon, the biometric template data relating to a set of features of a biometric image and including data relating to a subset of alignment features transformed according to any one of the preceding claims, the transformed subset of alignment features transformed in accordance with reference data determinable from the biometric template data, the data relating to the transformed subset being insufficient for, in isolation, providing sufficient information to determine the reference data;

providing a first processor in communication with the storage medium;

providing a second storage medium having live biometric data stored thereon, the live biometric data relating to a biometric image of a live biometric feature;

providing a second processor in communication with the second storage medium;

transmitting (3106) from the first processor data relating to a transformed subset of alignment features to the second processor;

determining (3108) with the second processor a transformation function of a predetermined format from the transformed subset of alignment features;

determining (3110) with the second processor data relating to the subset of alignment features from the data relating to the transformed subset of alignment features in dependence on the transformation function; and

aligning (3114) the live biometric features with the alignment features.

18. The method according to claim 17, wherein the first storage medium and the first processor are disposed on a smart card.

19. The method according to claim 17 or 18, wherein the biometric image is a fingerprint image.

20. The method according to any of claims 17, 18, or 19, wherein the live biometric data are provided by a biometric sensor in communication with the second processor.

21. The method according to to any of claims 17, 18, 19, or 20, further comprising:

transmitting data relating to the aligned biometric feature from the second processor to the first processor; and comparing the data relating to the aligned biometric feature with the biometric template data.

22. A storage medium comprising:

- feature data relating to each of a first plurality of features of the same biometric information source;

- transform data defining the transformation of said feature data by one transformation function F of a plurality of transformation functions, said transformation function dependent (3104, 3108) upon the value of a characteristic of each respective feature of the same biometric information source, and resulting in transformed feature values.

23. A storage medium according to claim 22, wherein the transformed data includes a result of the transformation function F.

24. A storage medium according to claim 22, wherein the transformed data includes data relating to a plurality of instructions, the instructions when executed resulting in performance of

transforming at least some of the feature data according to the transformation function F.

25. A storage medium according to claim 22 or 23, wherein the feature data includes data relating to fingerprint minutia.

26. A storage medium according to any one of claims 22 to 25, wherein the transformation function is based on a location of the fingerprint minutia and at least one of an orientation and a type of the fingerprint minutia.

27. A storage medium according to any one of claims 22 to 26, wherein the transformation function F is of the form:

$$F( Mi, r, t) = (Xi + r*\cos( Ai + t ), Yi + r*\sin( Ai + t ))$$

Where:

r and t are random parameters;
Mi represent Minutia i;
(Xi, Yi) be the location of Minutia i; and
(Ai) be the direction of Minutia i.

**28.** A storage medium according to any one of claims 22 to 26, wherein the transformation function F is of the form:

$$F(Mk, Mi) = (Xi + ri * \cos( Ai ), Yi + ri * \sin( Ai ) )$$

Where:

Mk is a particular minutia taken as internal reference frame;
ri = |Mk - Mi|;
Mi represent Minutia i;
(Xi, Yi) be the location of Minutia i; and
(Ai) be the direction of Minutia i.

**29.** A storage medium according to any one of claims 22 to 26, wherein the transformation function F is of the form:

$$F(Mk, Mi) = (Xi + ri * \cos( Ai - Ak ), Yi + ri * \sin( Ai - Ak ) )$$

Where:

Mk is a particular minutia taken as internal reference frame;
ri = |Mk - Mi|;
Mi represent Minutia i;
(Xi, Yi) be the location of Minutia i; and
(Ai) be the direction of Minutia i.

**30.** A storage medium according to claim any one of claims 22 to 26, wherein the transformation function F is of the form:

$$F(Mk, Mi) = (Xi + Rx, Yi + Ry )$$

Where:

Mk is a particular minutia taken as internal reference frame;
Rx is an arbitrary function of Xi - Xk;
Ry is an arbitrary function of Yi - Yk;
Mi represent Minutia i; and,
(Xi, Yi) be the location of Minutia i.

**31.** A storage medium according to any one of claims 22 to 26, wherein the transformation function F is of the form:

$$F(Mk, Mi) = (Xi + Rx, Yi + Ry, Ai + A )$$

Where:

Mk is a particular minutia taken as internal reference frame;
Rx is an arbitrary function of Xi- Xk;
Ry is an arbitrary function of Yi- Yk;
A is an arbitrary function of Ai- Ak;
Mi represent Minutia i;
(Xi, Yi) be the location of Minutia i; and
(Ai) be the direction of Minutia i.

**32.** A storage medium according to any one of claims 22 to 25, wherein the transformation function F is of the form:

$$F( Mi, r, D) = (Xi + r*\cos( Ai + D), Yi + r*\sin( Ai + D ))$$

Where:

r and t are random parameters;
D is a predefined base direction;
Mi represent Minutia i;
(Xi, Yi) be the location of Minutia i; and
(Ai) be the direction of Minutia i.

**33.** A storage medium comprising instructions that, cause a computing system to perform a method comprising:

providing biometric data relating to at least a biometric information sample;
extracting from the biometric data feature data relating to each of a plurality of features;
providing (3104, 3108) a transformation function F, the transformation function dependent upon at least the value of a characteristic of each respective feature, and,
transforming (3104, 3110) at least two of the plurality of features according to the transformation function *F*, resulting in transformed feature values.

## Patentansprüche

**1.** Verfahren zum Verarbeiten biometrischer Informationen, das die folgenden Schritte umfasst:

Empfangen biometrischer Daten, die sich auf wenigstens ein Muster biometrischer Informationen beziehen;
Extrahieren von Merkmal-Daten, die sich auf jedes einer Vielzahl von Merkmalen der biometrischen Daten beziehen;
Transformieren (3104, 3110) von Merkmal-Daten von wenigstens zwei der Vielzahl von Merkmalen entsprechend einer Transformationsfunktion F, so dass transformierte Merkmal-Werte entstehen, **dadurch gekennzeichnet, dass** die Transformationsfunktion wenigstens von dem Wert einer Charakteristik jedes entsprechenden Merkmals abhängt.

**2.** Verfahren nach Anspruch 1, das umfasst:

Bereitstellen eines ersten Speichermediums;
Speichern von Daten, die sich auf die Vielzahl von Merkmalen beziehen, in dem Speichermedium; und
Speichern von Daten, die sich auf die transformierten Merkmale beziehen, in dem Speichermedium.

**3.** Verfahren nach Anspruch 2, wobei das Speichermedium eine Smartcard umfasst.

**4.** Verfahren nach Anspruch 2, wobei das Speichermedium einen sicheren Authentifizierungs-Server umfasst.

**5.** Verfahren nach einem der vorangehenden Ansprüche, wobei das Muster biometrischer Informationen einen Fingerabdruck umfasst.

6. Verfahren nach einem der vorangehenden Ansprüche, das die folgenden Schritte umfasst:

   Speichern der transformierten Merkmale als öffentliche Vorlagen-Daten; und
   Speichern von Daten, die sich auf die Merkmal-Daten beziehen, als private Vorlagen-Daten in einem sicheren Speichermedium,
   wobei die öffentlichen Daten zur Bereitstellung für eine externe Verarbeitungseinrichtung zur Verwendung beim Abgleichen eines realen biometrischen Musters mit den privaten Vorlagen-Daten dienen.

7. Verfahren nach einem der vorangehenden Ansprüche, wobei die Transformationsfunktion eine Funktion eines ausgewählten internen Bezugsmerkmals ist, und das interne Bezugsmerkmal in der Vielzahl biometrischer Merkmale enthalten ist.

8. Verfahren nach einem der vorangehenden Ansprüche, wobei die Transformationsfunktion eine Funktion ist, die von einer Charakteristik jedes Merkmals außer einer Position desselben abhängt.

9. Verfahren nach einem der vorangehenden Ansprüche, wobei die Vielzahl von Merkmalen Fingerabdruck-Details enthalten.

10. Verfahren nach Anspruch 9, wobei die Transformationsfunktion eine Funktion einer Position der Fingerabdruck-Details sowie wenigstens einer Ausrichtung und eines Typs der Fingerabdruck-Details ist.

11. Verfahren nach einem der Ansprüche 1 bis 10, wobei die Transformationsfunktion F die folgende Form hat:

$$F(M_i, r, t) = (X_i + r*\cos(A_i + t), Y_i + r*\sin(A_i + t))$$

   wobei

   r und t Zufallsparameter sind;
   $M_i$ Details i darstellt;
   ($X_i$, $Y_i$) die Position von Details i ist; und
   ($A_i$) die Richtung von Details i ist.

12. Verfahren nach einem der Ansprüche 1 bis 10, wobei die Transformationsfunktion F die folgende Form hat:

$$F(M_k, M_i) = (X_i + r_i * \cos(A_i), Y_i + r_i * \sin(A_i))$$

   wobei

   $M_k$ ein spezielles Detail ist, das als ein interner Bezugsrahmen dient;
   $r_i = |M_k - M_i|$;
   $M_i$ Details i darstellt;
   ($X_i$, $Y_i$) die Position von Details i ist; und
   ($A_i$) die Richtung von Details i ist.

13. Verfahren nach einem der Ansprüche 1 bis 10, wobei die Transformationsfunktion F die folgende Form hat:

$$F(M_k, M_i) = (X_i + r_i * \cos(A_i - A_k), Y_i + r_i * \sin(A_i - A_k))$$

   wobei

   $M_k$ ein spezielles Detail ist, das als ein interner Bezugsrahmen dient;
   $r_i = |M_k - M_i|$;

Mi Details i darstellt;
(Xi, Yi) die Position von Details i ist; und
(Ai) die Richtung von Details i ist.

**14.** Verfahren nach einem der Ansprüche 1 bis 10, wobei die Transformationsfunktion F die folgende Form hat:

$$F(Mk, Mi) = (Xi + Rx, Yi + Ry)$$

wobei:

Mk ein spezielles Detail ist, das als ein interner Bezugsrahmen dient;
Rx eine beliebige Funktion von Xi - Xk ist;
Ry eine beliebige Funktion von Yi - Vk ist;
Mi Details i darstellt; und
(Xi, Yi) die Position von Details i ist.

**15.** Verfahren nach einem der Ansprüche 1 bis 10, wobei die Transformationsfunktion F die folgende Form hat:

$$F(Mk, Mi) = (Xi + Rx, Yi + Ry, Ai + A)$$

wobei

Mk ein spezielles Detail ist, das als ein interner Bezugsrahmen dient;
Rx eine beliebige Funktion von Xi - Xk ist;
Ry eine beliebige Funktion von Yi - Yk ist;
A eine beliebige Funktion von Ai - Ak ist;
Mi Details i darstellt;
(Xi, Yi) die Position von Details i ist; und
(Ai) die Richtung von Details i ist.

**16.** Verfahren nach einem der Ansprüche 1 bis 10, wobei die Transformationsfunktion F die folgende Form hat:

$$F(Mi, r, D) = (Xi + r*cos(Ai + D), Yi + r*sin(Ai + D))$$

wobei

r und t Zufallsparameter sind;
D eine vordefinierte Basisrichtung ist;
Mi Details i darstellt;
(Xi, Yi) die Position von Details i ist; und
(Ai) die Richtung von Details i ist.

**17.** Verfahren für biometrische Identifizierung, das umfasst:

Bereitstellen eines ersten Speichermediums, auf dem biometrische Vorlagen-Daten gespeichert sind, wobei sich die biometrischen Vorlagen-Daten auf einen Satz von Merkmalen eines biometrischen Bildes beziehen und Daten enthalten, die sich auf einen Teilsatz nach einem der vorangehenden Ansprüche transformierter Abgleich-Merkmale beziehen, wobei der transformierte Teilsatz von Abgleich-Merkmalen entsprechend Bezugs-Daten transformiert wird, die aus den biometrischen Vorlagen-Daten bestimmt werden können, und die Daten, die sich auf den transformierten Teilsatz beziehen, allein nicht ausreichen, um genügend Informationen zum Bestimmen der Bezugs-Daten bereitzustellen;
Bereitstellen einer ersten Verarbeitungseinrichtung, die mit dem Speichermedium kommuniziert;

Bereitstellen eines zweiten Speichermediums, auf dem reale biometrische Daten gespeichert sind, wobei sich die realen biometrischen Daten auf ein biometrisches Bild eines realen biometrischen Merkmals beziehen; Bereitstellen einer zweiten Verarbeitungseinrichtung, die mit dem zweiten Speichermedium kommuniziert; Senden (3106) von Daten, die sich auf einen transformierten Teilsatz von Abgleich-Merkmalen beziehen, von der ersten Verarbeitungseinrichtung zu der zweiten Verarbeitungseinrichtung; Bestimmen (3108) einer Transformationsfunktion eines vorgegebenen Formats aus dem transformierten Teilsatz von Abgleich-Merkmalen mit der zweiten Verarbeitungseinrichtung; Bestimmen (3110) von Daten, die sich auf den Teilsatz von Abgleich-Merkmalen beziehen, aus den Daten, die sich auf den transformierten Teilsatz von Abgleich-Merkmalen beziehen, in Abhängigkeit von der Transformationsfunktion mit der zweiten Verarbeitungseinrichtung; und Abgleichen (3114) der realen biometrischen Merkmale mit den Abgleich-Merkmalen.

18. Verfahren nach Anspruch 17, wobei das erste Speichermedium und die erste Verarbeitungseinrichtung auf einer Smartcard angeordnet sind.

19. Verfahren nach Anspruch 17 oder 18, wobei das biometrische Bild ein Fingerabdruck-Bild ist.

20. Verfahren nach einem der Ansprüche 17, 18 oder 19, wobei die realen biometrischen Daten durch einen biometrischen Sensor bereitgestellt werden, der mit der zweiten Verarbeitungseinrichtung kommuniziert.

21. Verfahren nach einem der Ansprüche 17, 18, 19 oder 20, das des Weiteren umfasst:

Senden von Daten, die sich auf das abgeglichene biometrische Merkmal beziehen, von der zweiten Verarbeitungseinrichtung zu der ersten Verarbeitungseinrichtung; und Vergleichen der Daten, die sich auf das abgeglichene biometrische Merkmal beziehen, mit den biometrischen Vorlagen-Daten.

22. Speichermedium, das umfasst:

Merkmal-Daten, die sich auf jedes einer ersten Vielzahl von Merkmalen der gleichen Quelle biometrischer Informationen beziehen; Transformations-Daten, die die Transformation der Merkmal-Daten mit einer Transformationsfunktion F einer Vielzahl von Transformationsfunktionen definieren, wobei die Transformationsfunktion von dem Wert einer Charakteristik jedes entsprechenden Merkmals der gleichen Quelle biometrischer Informationen abhängig ist (3104, 3108) und in transformierten Merkmal-Werten resultiert.

23. Speichermedium nach Anspruch 22, wobei die transformierten Daten ein Ergebnis der Transformationsfunktion F enthalten.

24. Speichermedium nach Anspruch 22, wobei die transformierten Daten Daten enthalten, die sich auf eine Vielzahl von Befehlen beziehen, und die Befehle, wenn sie ausgeführt werden, die Durchführung des folgenden Schrittes bewirken:

Transformieren wenigstens einiger der Merkmal-Daten entsprechend der Transformationsfunktion F.

25. Speichermedium nach Anspruch 22 oder 23, wobei die Merkmal-Daten Daten enthalten, die sich auf Fingerabdruck-Details beziehen.

26. Speichermedium nach einem der Ansprüche 22 bis 25, wobei die Transformationsfunktion auf einer Position der Fingerabdruck-Details sowie wenigstens einer Ausrichtung und einem Typ der Fingerabdruck-Details basiert.

27. Speichermedium nach einem der Ansprüche 22 bis 26, wobei die Transformationsfunktion die folgende Form hat:

$$F(M_i, r, t) = (X_i + r*\cos(A_i + t), Y_i + r*\sin(A_i + t))$$

wobei

r und t Zufallsparameter sind;
Mi Details i darstellt;
(Xi, Yi) die Position von Details i ist; und
(Ai) die Richtung von Details i ist.

28. Speichermedium nach einem der Ansprüche 22 bis 26, wobei die Transformationsfunktion F die folgende Form hat:

$$F(Mk, Mi) = (Xi + ri * \cos(Ai), Yi + ri * \sin(Ai))$$

wobei

Mk ein spezielles Detail ist, das als ein interner Bezugsrahmen dient;
ri = |Mk - Mi|;
Mi Details i darstellt;
(Xi, Yi) die Position von Details i ist; und
(Ai) die Richtung von Details i ist.

29. Speichermedium nach einem der Ansprüche 22 bis 26, wobei die Transformationsfunktion F die folgende Form hat:

$$F(Mk, Mi) = (Xi + ri * \cos(Ai - Ak), Yi + ri * \sin(Ai - Ak))$$

wobei

Mk ein spezielles Detail ist, das als ein interner Bezugsrahmen dient;
ri = |Mk - Mi|;
Mi Details i darstellt;
(Xi, Yi) die Position von Details i ist; und
(Ai) die Richtung von Details i ist.

30. Speichermedium nach einem der Ansprüche 22 bis 26, wobei die Transformationsfunktion F die folgende Form hat:

$$F(Mk, Mi) = (Xi + Rx, Yi + Ry)$$

wobei:

Mk ein spezielles Detail ist, das als ein interner Bezugsrahmen dient;
Rx eine beliebige Funktion von Xi - Xk ist;
Ry eine beliebige Funktion von Yi - Vk ist;
Mi Details i darstellt; und
(Xi, Yi) die Position von Details i ist.

31. Speichermedium nach einem der Ansprüche 22 bis 26, wobei die Transformationsfunktion F die folgende Form hat:

$$F(Mk, Mi) = (Xi + Rx, Yi + Ry, Ai + A)$$

wobei

Mk ein spezielles Detail ist, das als ein interner Bezugsrahmen dient;
Rx eine beliebige Funktion von Xi - Xk ist;
Ry eine beliebige Funktion von Yi - Yk ist;

A eine beliebige Funktion von Ai - Ak ist;
Mi Details i darstellt;
(Xi, Yi) die Position von Details i ist; und
(Ai) die Richtung von Details i ist.

**32.** Speichermedium nach einem der Ansprüche 22 bis 25, wobei die Transformationsfunktion F die folgende Form hat:

$$F(\,Mi,\, r,\, D) = (Xi + r*cos(\,Ai + D),\, Yi + r*sin(\,Ai + D\,))$$

wobei

r und t Zufallsparameter sind;
D eine vordefinierte Basisrichtung ist;
Mi Details i darstellt;
(Xi, Yi) die Position von Details i ist; und
(Ai) die Richtung von Details i ist.

**33.** Speichermedium, das Befehle umfasst, die ein Computersystem veranlassen, ein Verfahren durchzuführen, das umfasst:

Bereitstellen biometrischer Daten, die sich auf wenigstens ein Muster biometrischer Daten beziehen;
Extrahieren von Merkmal-Daten, die sich auf jedes einer Vielzahl von Merkmalen beziehen, aus den biometrischen Daten;
Bereitstellen (3104, 3108) einer Transformationsfunktion F, wobei die Transformationsfunktion wenigstens von dem Wert einer Charakteristik jedes entsprechenden Merkmals abhängt, und
Transformieren (3104, 3110) von wenigstens zwei der Vielzahl von Merkmalen entsprechend der Transformationsfunktion, so dass transformierte Merkmal-Werte entstehen.

## Revendications

**1.** Procédé de traitement d'informations biométriques comprenant les étapes consistant à :

- recevoir des données biométriques concernant au moins un échantillon d'informations biométriques ;
- extraire des données de particularité concernant chacune d'une pluralité de particularités des données biométriques ;
- transformer (3104, 3110) les données de particularité d'au moins deux de la pluralité de particularités selon une fonction de transformation F, résultant en des valeurs de particularité transformées, **caractérisé en ce que** ladite fonction de transformation dépend au moins de la valeur d'une caractéristique de chaque particularité respective.

**2.** Procédé selon la revendication 1, consistant à :

- fournir un premier support de mémorisation ;
- mémoriser des données concernant la pluralité de particularités sur le support de mémorisation ; et
- mémoriser des données concernant les particularités transformées sur le support de mémorisation.

**3.** Procédé selon la revendication 2, dans lequel le support de mémorisation comprend une carte à puce.

**4.** Procédé selon la revendication 2, dans lequel le support de mémorisation comprend un serveur d'authentification sécurisé.

**5.** Procédé selon l'une quelconque des revendications précédentes, dans lequel l'échantillon d'informations biométriques comprend une empreinte digitale.

**6.** Procédé selon l'une quelconque des revendications précédentes, comprenant les étapes consistant à :

mémoriser les particularités transformées en tant que données de modèle publiques ; et

mémoriser des données concernant les données de particularité en tant que données de modèle privées sur un support de mémorisation sécurisé,

dans lequel les données publiques sont destinées à être fournies à un processeur externe pour utilisation pour aligner un échantillon biométrique dynamique avec les données de modèle privées.

7. Procédé selon l'une quelconque des revendications précédentes, dans lequel la fonction de transformation est une fonction d'une particularité de référence interne sélectionnée, la particularité de référence interne étant comprise dans la pluralité de particularités biométriques.

8. Procédé selon l'une quelconque des revendications précédentes, dans lequel la fonction de transformation est une fonction qui dépend d'une caractéristique de chaque particularité autre qu'un emplacement de celle-ci.

9. Procédé selon l'une quelconque des revendications précédentes, dans lequel la pluralité de particularités comprennent un point caractéristique d'empreinte digitale.

10. Procédé selon la revendication 9, dans lequel la fonction de transformation est une fonction d'un emplacement de point caractéristique d'empreinte digitale et d'au moins l'un d'une orientation et d'un type de point caractéristique d'empreinte digitale.

11. Procédé selon l'une quelconque des revendications 1 à 10, dans lequel la fonction de transformation F a la forme :

$$F(\,Mi,\, r,\, t\,) = (Xi + r*\cos(\,Ai + t\,),\, Yi + r*\sin(\,Ai + t\,))$$

où

r et t sont des paramètres aléatoires ;
Mi représente un point caractéristique i ;
(Xi, Yi) est l'emplacement du point caractéristique i ; et
(Ai) est la direction du point caractéristique i.

12. Procédé selon l'une quelconque des revendications 1 à 10, dans lequel la fonction de transformation F a la forme :

$$F(Mk,\, Mi) = (Xi + ri * \cos(\,Ai\,),\, Yi + ri * \sin(\,Ai\,))$$

où

Mk est un point caractéristique particulier pris en tant que trame de référence interne ;
ri = | Mk - Mi | ;
Mi représente un point caractéristique i ;
(Xi, Yi) est l'emplacement du point caractéristique i ; et
(Ai) est la direction du point caractéristique i.

13. Procédé selon l'une quelconque des revendications 1 à 10, dans lequel la fonction de transformation F a la fourme :

$$F(Mk,\, Mi) = (Xi + ri * \cos(\,Ai - Ak\,),\, Yi + ri * \sin(\,Ai - Ak\,))$$

où

Mk est un point caractéristique particulier pris en tant que trame de référence interne ;
ri = | Mk - Mi | ;
Mi représente un point caractéristique i ;

(Xi, Yi) est l'emplacement du point caractéristique i ; et
(Ai) est la direction du point caractéristique i.

**14.** Procédé selon l'une quelconque des revendications 1 à 10, dans lequel la fonction de transformation F a la fourme :

$$F(Mk, Mi) = (Xi + Rx, Yi + Ry)$$

où

Mk est un point caractéristique particulier pris en tant que trame de référence interne ;
Rx est une fonction arbitraire de Xi - Xk ;
Ry est une.fonction arbitraire de Yi - Yk ;
Mi représente un point caractéristique i ; et
(Xi, Yi) est l'emplacement du point caractéristique i.

**15.** Procédé selon l'une quelconque des revendications 1 à 10, dans lequel la fonction de transformation F a la forme :

$$F(Mk, Mi) = (Xi + Rx, Yi + Ry, Ai + A)$$

où

Mk est un point caractéristique particulier pris en tant que trame de référence interne ;
Rx est une fonction arbitraire de Xi - Xk ;
Ry est une fonction arbitraire de Yi - Yk ;
A est une fonction arbitraire de Ai - Ak ;
Mi représente un point caractéristique i ;
(Xi, Yi) est l'emplacement du point caractéristique i ; et
(Ai) est la direction du point caractéristique i.

**16.** Procédé selon l'une quelconque des revendications 1 à 10, dans lequel la fonction de transformation F a la forme :

$$F(Mi, r, D) = (Xi + r*cos(Ai + D), Yi + r*sin(Ai + D))$$

où

r et t sont des paramètres aléatoires ;
D est une direction de base prédéfinie ;
Mi représente un point caractéristique i ;
(Xi, Yi) est l'emplacement du point caractéristique i ; et
(Ai) est la direction du point caractéristique i.

**17.** Procédé d'identification biométrique consistant à :

prévoir un premier support de mémorisation sur lequel des données de modèle biométrique sont mémorisées, les données de modèle biométrique concernant un ensemble de particularités d'une image biométrique et comprenant des données concernant un sous-ensemble de particularités d'alignement transformé selon l'une quelconque des revendications précédentes, le sous-ensemble transformé de particularités d'alignement étant transformé selon des données de référence déterminables à partir des données de modèle biométrique, les données concernant le sous-ensemble transformé étant insuffisantes pour, isolément, fournir des informations suffisantes pour déterminer les données de référence ;
prévoir un premier processeur en communication avec le support de mémorisation ;
prévoir un second support de mémorisation sur lequel des données biométriques dynamiques sont enregistrées, les données biométriques dynamiques concernant une image biométrique d'une particularité biométrique dynamique ;

prévoir un second processeur en communication avec le second support de mémorisation ;

transmettre (3106), du premier au second processeur, des données concernant un sous-ensemble transformé de particularités d'alignement ;

déterminer (3108) par le second processeur une fonction de transformation d'un format prédéterminé à partir du sous-ensemble transformé de particularités d'alignement ;

déterminer (3110) par le second processeur des données concernant le sous-ensemble de particularités d'alignement à partir des données concernant le sous-ensemble transformé de particularités d'alignement en fonction de la fonction de transformation ; et

aligner (3114) les particularités biométriques dynamiques avec les particularités d'alignement.

18. Procédé selon la revendication 17, dans lequel le premier support de mémorisation et le premier processeur sont disposés sur une carte à puce.

19. Procédé selon la revendication 17 ou 18, dans lequel l'image biométrique est une image d'empreinte digitale.

20. Procédé selon l'une quelconque des revendications 17, 18 ou 19, dans lequel les données biométriques dynamiques sont fournies par un capteur biométrique en communication avec le second processeur.

21. Procédé selon l'une quelconque des revendications 17, 18, 19 ou 20, consistant en outre à :

transmettre des données concernant la particularité biométrique alignée du second processeur au premier processeur ; et

comparer les données concernant la particularité biométrique alignée avec les données de modèle biométrique.

22. Support de mémorisation comprenant :

- des données de particularité concernant chacune d'une première pluralité de particularités de la même source d'informations biométriques ;

- des données de transformation définissant la transformation desdites données de particularité par une fonction de transformation F d'une pluralité de fonctions de transformation, ladite fonction de transformation (3104, 3108) dépendant de la valeur d'une caractéristique de chaque particularité respective de la même source d'informations biométriques, et résultant en des valeurs de particularité transformées.

23. Support de mémorisation selon la revendication 22, dans lequel les données transformées comprennent un résultat de la fonction de transformation F.

24. Support de mémorisation selon la revendication 22, dans lequel les données transformées comprennent des données concernant une pluralité d'instructions, les instructions, lorsqu'elles sont exécutées, résultant en l'exécution de :

la transformation d'au moins certaines des données de particularité selon la fonction de transformation F.

25. Support de mémorisation selon la revendication 22 ou 23, dans lequel les données de particularité comprennent des données concernant un point caractéristique d'empreinte digitale.

26. Support de mémorisation selon l'une quelconque des revendications 22 à 25, dans lequel la fonction de transformation est basée sur un emplacement du point caractéristique d'empreinte digitale et au moins l'un d'une orientation et d'un type du point caractéristique d'empreinte digitale.

27. Support de mémorisation selon l'une quelconque des revendications 22 à 26, dans lequel la fonction de transformation F a la forme :

$$F(\, Mi, r, t\,) = (Xi + r^* \cos(\, Ai + t\,), Yi + r^* \sin(\, Ai + t\,))$$

où

r et t sont des paramètres aléatoires ;
Mi représente un point caractéristique i ;
(Xi, Yi) est l'emplacement du point caractéristique i ; et
(Ai) est la direction du point caractéristique i.

**28.** Support de mémorisation selon l'une quelconque des revendications 22 à 26, dans lequel la fonction de transformation F a la forme :

$$F(Mk, Mi) = (Xi + ri * \cos(Ai), Yi + ri * \sin(Ai))$$

où

Mk est un point caractéristique particulier pris en tant que trame de référence interne ;
ri = |Mk - Mi| ;
Mi représente un point caractéristique i ;
(Xi, Yi) est l'emplacement du point caractéristique i ; et
(Ai) est la direction du point caractéristique i.

**29.** Support de mémorisation selon l'une quelconque des revendications 22 à 26, dans lequel la fonction de transformation F a la forme :

$$F(Mk, Mi) = (Xi + ri * \cos(Ai - Ak), Yi + ri * \sin(Ai - Ak))$$

où

Mk est un point caractéristique particulier pris en tant que trame de référence interne ;
ri = |Mk - Mi| ;
Mi représente un point caractéristique i ;
(Xi, Yi) est l'emplacement du point caractéristique i ; et
(Ai) est la direction du point caractéristique i.

**30.** Support de mémorisation selon l'une quelconque des revendications 22 à 26, dans lequel la fonction de transformation F a la forme :

$$F(Mk, Mi) = (Xi + Rx, Yi + Ry)$$

où

Mk est un point caractéristique particulier pris en tant que trame de référence interne ;
Rx est une fonction arbitraire de Xi - Xk ;
Ry est une fonction arbitraire de Yi - Yk ;
Mi représente un point caractéristique i ; et
(Xi, Yi) est l'emplacement du point caractéristique i.

**31.** Support de mémorisation selon l'une quelconque des revendications 22 à 26, dans lequel la fonction de transformation F a la forme :

$$F(Mk, Mi) = (Xi + Rx, Yi + Ry, Ai + A)$$

où

Mk est un point caractéristique particulier pris en tant que trame de référence interne ;
Rx est une fonction arbitraire de Xi - Xk ;
Ry est une fonction arbitraire de Yi - Yk ;
A est une fonction arbitraire de Ai - Ak ;
Mi représente un point caractéristique i ;
(Xi, Yi) est l'emplacement du point caractéristique i ; et
(Ai) est la direction du point caractéristique i.

**32.** Support de mémorisation selon l'une quelconque des revendications 22 à 25, dans lequel la fonction de transformation F a la forme :

$$F(Mi, r, D) = (Xi + r*\cos(Ai + D), Yi + r*\sin(Ai + D))$$

où

r et t sont des paramètres aléatoires ;
D est une direction de base prédéfinie ;
Mi représente un point caractéristique i ;
(Xi, Yi) est l'emplacement du point caractéristique i ; et
(Ai) est la direction du point caractéristique i.

**33.** Support de mémorisation comprenant des instructions qui amènent un système informatique à effectuer un procédé consistant à :

fournir des données biométriques concernant au moins un échantillon d'informations biométriques ;
extraire des données biométriques des données de particularité concernant chacune d'une pluralité de particularités ;
fournir (3104, 3108) une fonction de transformation F, la fonction de transformation dépendant au moins de la valeur d'une caractéristique de chaque particularité respective ; et
transformer (3104, 3110) au moins deux de la pluralité de particularités selon une fonction de transformation F, résultant en des valeurs de particularité transformées.

CAPTURE FINGERPRINT IMAGE ◁√10

↓

ADJUST CONTRAST ◁√11

↓

FILTER IMAGE ◁√12

↓

EXTRACT CORE ◁√13

↓

DETERMINE CORE LOCATION AND ORIENTATION ◁√14

↓

ORIENT IMAGE SUCH THAT CORE HAS PREDETERMINED LOCATION AND ORIENTATION ◁√15

↓

EXTRACT OTHER FEATURES ◁√16

↓

COMPARE EXTRACTED FEATURES TO TEMPLATE TO DETERMINE LIKELIHOOD OF MATCH ◁√17

↓

IF MATCH IS LIKELY, IDENTIFY OR AUTHORIZE USER ◁√18

**Figure 1**
**(PRIOR ART)**

```
┌─────────────────────────────────────────────────┐
│     STORE PUBLIC PORTION OF FINGERPRINT IMAGE     │ ∿ 20
└─────────────────────────────────────────────────┘
                        │
                        ▼
┌─────────────────────────────────────────────────┐
│        STORE PRIVATE PORTION OF TEMPLATE          │ ∿ 21
└─────────────────────────────────────────────────┘
                        │
                        ▼
┌─────────────────────────────────────────────────┐
│           SENSE IMAGE OF FINGERPRINT              │ ∿ 22
└─────────────────────────────────────────────────┘
                        │
                        ▼
┌─────────────────────────────────────────────────┐
│                  RECEIVE PIN                      │ ∿ 23
└─────────────────────────────────────────────────┘
                        │
                        ▼
┌─────────────────────────────────────────────────┐
│             PROVIDE PIN TO SMARTCARD              │ ∿ 24
└─────────────────────────────────────────────────┘
                        │
                        ▼
┌─────────────────────────────────────────────────┐
│        BASED ON PIN, PROVIDE PUBLIC PORTION OF     │ ∿ 25
│       FINGERPRINT IMAGE TO HOST PROCESSOR          │
└─────────────────────────────────────────────────┘
                        │
                        ▼
┌─────────────────────────────────────────────────┐
│  ALIGN SENSED IMAGE WITH PORTION OF FINGERPRINT    │ ∿ 26
│        IMAGE RECEIVED FROM SMARTCARD               │
└─────────────────────────────────────────────────┘
                        │
                        ▼
┌─────────────────────────────────────────────────┐
│  EXTRACT FROM ALIGNED IMAGE AN IMAGE PORTION FROM  │ ∿ 27
│     WHICH THE PRIVATE TEMPLATE IS DERIVED          │
└─────────────────────────────────────────────────┘
                        │
                        ▼
┌─────────────────────────────────────────────────┐
│     PROVIDING THE IMAGE PORTION TO THE SMARTCARD   │ ∿ 28
└─────────────────────────────────────────────────┘
                        │
                        ▼
┌─────────────────────────────────────────────────┐
│ COMPARING THE IMAGE PORTION PROVIDED TO THE SMARTCARD │ ∿ 29
│ WITH THE PRIVATE PORTION OF THE TEMPLATE TO DETERMINE │
│              LIKELIHOOD OF MATCH                   │
└─────────────────────────────────────────────────┘
                        │
                        ▼
┌─────────────────────────────────────────────────┐
│    IF MATCH IS LIKELY, IDENTIFY OR AUTHORIZE USER  │ ∿ 30
└─────────────────────────────────────────────────┘
```

Figure 2
(PRIOR ART)

PROVIDE PIN $\sim$ 31

PROVIDE PIN TO SMARTCARD $\sim$ 32

SENSING A BIOMETRIC IMAGE $\sim$ 33

FROM A TEMPLATE ASSOCIATED WITH THE RECEIVED PIN, RETRIEVE SEVERAL FEATURE LOCATIONS $\sim$ 34

PROVIDE FEATURE LOCATIONS TO HOST PROCESSOR $\sim$ 35

PREPROCESS IMAGE ON HOST PROCESSOR $\sim$ 36

EXTRACT FEATURES FROM IMAGE ON HOST PROCESSOR $\sim$ 37

ALIGN FEATURE LOCATIONS OF EXTRACTED FEATURES AND THOSE PROVIDED FROM THE SMARTCARD TO ORIENT THE SENSED IMAGE $\sim$ 38

DETERMINING AT LEAST A PARAMETER ASSOCIATED WITH EACH FEATURE A LOCATION OF WHICH IS PROVIDED FROM THE SMARTCARD $\sim$ 39

PROVIDING THE AT LEAST A PARAMETER IN A PREDETERMINED ORDER TO THE SMARTCARD $\sim$ 40

COMPARING THE RECEIVED AT LEAST A PARAMETER WITH PARAMETERS STORED WITHIN THE TEMPLATE ASSOCIATED WITH THE RECEIVED PIN TO DETERMINE LIKELIHOOD OF MATCH $\sim$ 41

IF MATCH IS LIKELY, IDENTIFY OR AUTHORIZE USER $\sim$ 42

Figure 3

| Feature | X-loc | Y-loc | Orientation | Type |
|---------|-------|-------|-------------|------|
| Core | 0 | 0 | 0 | whirl |
| Minutia | 4 | 4 | 34 | 2 |
| Minutia | -4 | -1 | 306 | 1 |
| Minutia | 1 | -4 | 270 | 1 |
| Minutia | 12 | -1 | 165 | 2 |
| Minutia | -14 | 4 | 12 | 2 |
| Minutia | 34 | -40 | 287 | 1 |
| Minutia | 6 | 32 | 73 | 2 |
| Minutia | -3 | -44 | 102 | 2 |
| Minutia | 18 | -22 | 56 | 1 |
| Minutia | 12 | -1 | 156 | 1 |
| Minutia | -26 | 9 | 43 | 2 |
| Minutia | 22 | -28 | 298 | 1 |

**Figure 4**

PROVIDE PIN ⌇43

PROVIDE PIN TO SMARTCARD ⌇44

SENSING A BIOMETRIC IMAGE ⌇45

FROM A TEMPLATE ASSOCIATED WITH THE RECEIVED PIN, RETRIEVE 12 MINUTIA LOCATIONS ⌇46

PROVIDE MINUTIA LOCATIONS TO HOST PROCESSOR ⌇47

PREPROCESS IMAGE ON HOST PROCESSOR ⌇48

EXTRACT MINUTIA'S FROM IMAGE ON HOST PROCESSOR ⌇49

ALIGN MINUTIA LOCATIONS OF EXTRACTED MINUTIA'S AND THOSE PROVIDED FROM THE SMARTCARD TO ORIENT THE SENSED IMAGE ⌇50

DETERMINING ANGLE OF EACH MINUTIA, A LOCATION OF WHICH IS PROVIDED FROM THE SMARTCARD ⌇51

PROVIDING THE ANGLE IN A SAME ORDER AS THE LOCATIONS PROVIDED FROM THE SMARTCARD TO THE SMARTCARD ⌇52

COMPARING THE RECEIVED ANGLES WITH ANGLES STORED WITHIN THE TEMPLATE ASSOCIATED WITH THE RECEIVED PIN TO DETERMINE LIKELIHOOD OF MATCH ⌇53

IF MATCH IS LIKELY, IDENTIFY OR AUTHORIZE USER ⌇54

Figure 5

PROVIDE PIN — 55

↓

PROVIDE PIN TO SMARTCARD — 56

↓

SENSING A BIOMETRIC IMAGE — 57

↓

FROM A TEMPLATE ASSOCIATED WITH THE RECEIVED PIN, RETRIEVE SEVERAL FEATURE LOCATIONS — 58

↓

PROVIDE MINUTIA LOCATIONS TO HOST PROCESSOR — 59

↓

PREPROCESS IMAGE ON HOST PROCESSOR — 60

↓

EXTRACT FEATURES FROM IMAGE ON HOST PROCESSOR — 61

↓

ALIGN FEATURE LOCATIONS OF EXTRACTED FEATURES AND THOSE PROVIDED FROM THE SMARTCARD TO ORIENT THE SENSED IMAGE IN EACH OF A PLURALITY OF UNAMBIGUOUS ORIENTATIONS — 62

↓

DETERMINING AT LEAST A PARAMETER ASSOCIATED WITH EACH FEATURE A LOCATION OF WHICH IS PROVIDED FROM THE SMARTCARD FOR EACH OF THE UNAMBIGUOUS ORIENTATIONS — 63

↓

PROVIDING THE AT LEAST A PARAMETER IN A PREDETERMINED ORDER TO THE SMARTCARD — 64

↓

COMPARING THE RECEIVED AT LEAST A PARAMETER WITH PARAMETERS STORED WITHIN THE TEMPLATE ASSOCIATED WITH THE RECEIVED PIN TO DETERMINE LIKELIHOOD OF MATCH — 65

↓

IF MATCH IS LIKELY, IDENTIFY OR AUTHORIZE USER — 66

**Figure 6**

**Figure 6a**

**Figure 15**

SENSING A BIOMETRIC IMAGE 67

PROVIDING FEATURE LOCATIONS DERIVED FROM A TEMPLATE
STORED ON A SMARTCARD TO HOST PROCESSOR 68

PREPROCESS IMAGE ON HOST PROCESSOR 69

EXTRACT FEATURES FROM IMAGE ON HOST PROCESSOR 70

ALIGN FEATURE LOCATIONS OF EXTRACTED FEATURES AND THOSE
PROVIDED FROM THE SMARTCARD TO ORIENT THE SENSED IMAGE 71

DETERMINING AT LEAST A PARAMETER ASSOCIATED WITH EACH
FEATURE A LOCATION OF WHICH IS PROVIDED FROM THE SMARTCARD

72

PROVIDING THE AT LEAST A PARAMETER IN A
PREDETERMINED ORDER TO THE SMARTCARD 73

74

COMPARING THE RECEIVED AT LEAST A PARAMETER WITH PARAMETERS
STORED WITHIN THE TEMPLATE TO DETERMINE LIKELIHOOD OF MATCH

IF MATCH IS LIKELY, IDENTIFY OR AUTHORIZE USER 75

Figure 7

SENSING A BIOMETRIC IMAGE — 76

PROVIDING FEATURE LOCATIONS DERIVED FROM A TEMPLATE STORED ON A SMARTCARD TO HOST PROCESSOR AND SOME FALSE FEATURE LOCATIONS — 77

PREPROCESS IMAGE ON HOST PROCESSOR — 78

EXTRACT FEATURES FROM IMAGE ON HOST PROCESSOR — 79

ALIGN FEATURE LOCATIONS OF EXTRACTED FEATURES AND THOSE PROVIDED FROM THE SMARTCARD TO ORIENT THE SENSED IMAGE IN A BEST MANNER — 80

DETERMINING AT LEAST A PARAMETER ASSOCIATED WITH EACH FEATURE A LOCATION OF WHICH IS PROVIDED FROM THE SMARTCARD — 81

PROVIDING THE AT LEAST A PARAMETER IN A PREDETERMINED ORDER TO THE SMARTCARD — 82

COMPARING THE RECEIVED AT LEAST A PARAMETER WITH PARAMETERS STORED WITHIN THE TEMPLATE TO DETERMINE LIKELIHOOD OF MATCH — 83

IF MATCH IS LIKELY, IDENTIFY OR AUTHORIZE USER — 84

**Figure 8**

SENSING A BIOMETRIC IMAGE — 85

PROVIDING FEATURE LOCATIONS DERIVED FROM A TEMPLATE STORED ON A SMARTCARD TO HOST PROCESSOR AND SOME FALSE FEATURE LOCATIONS — 86

PREPROCESS IMAGE ON HOST PROCESSOR — 87

EXTRACT FEATURES FROM IMAGE ON HOST PROCESSOR — 88

ALIGN FEATURE LOCATIONS OF EXTRACTED FEATURES AND THOSE PROVIDED FROM THE SMARTCARD TO ORIENT THE SENSED IMAGE IN A BEST MANNER — 89

DETERMINING AT LEAST A PARAMETER ASSOCIATED WITH EACH FEATURE A LOCATION OF WHICH IS PROVIDED FROM THE SMARTCARD — 90

PROVIDING THE AT LEAST A PARAMETER IN A PREDETERMINED ORDER TO THE SMARTCARD, AT LEAST A PARAMETER INDICATIVE OF A FEATURE NOT BEING FOUND — 91

COMPARING THE RECEIVED AT LEAST A PARAMETER WITH PARAMETERS STORED WITHIN THE TEMPLATE ASSOCIATED WITH THE RECEIVED PIN TO DETERMINE LIKELIHOOD OF A MATCH — 92

IF MATCH IS LIKELY, IDENTIFY OR AUTHORIZE USER — 93

**Figure 9**

SENSING A BIOMETRIC IMAGE ◠⁄94

PROVIDING LOCATIONS BASED ON LOCATIONS OF FEATURES
WITHIN A PREVIOUSLY CAPTURED FINGERPRINT AND USEABLE
FOR ALIGNING THE FINGERPRINT IN ONE OR MORE UNAMBIGUOUS ◠⁄95
ORIENTATIONS AND TRANSLATIONAL FASHIONS

PREPROCESS IMAGE ON HOST PROCESSOR ◠⁄96

EXTRACT FEATURES FROM IMAGE ON HOST PROCESSOR ◠⁄97

ALIGN FEATURE LOCATIONS OF EXTRACTED FEATURES USING THE
PROVIDED LOCATIONS TO ORIENT THE SENSED IMAGE IN AT LEAST ◠⁄98
AN UNAMBIGUOUS MANNER

DETERMINING AT LEAST A PARAMETER ASSOCIATED WITH EACH FEATURE
A LOCATION OF WHICH IS PROVIDED FROM THE SMARTCARD

◠⁄99

PROVIDING THE AT LEAST A PARAMETER IN A
PREDETERMINED ORDER TO THE SMARTCARD ◠⁄100

COMPARING THE RECEIVED AT LEAST A PARAMETER WITH
PARAMETERS STORED WITHIN THE TEMPLATE TO DETERMINE ◠⁄101
LIKELIHOOD OF A MATCH

IF MATCH IS LIKELY, IDENTIFY OR AUTHORIZE USER ◠⁄102

Figure 10

SENSING A BIOMETRIC IMAGE — 103

PROVIDING LOCATIONS AND OFFSETS BASED ON LOCATIONS OF FEATURES WITHIN A PREVIOUSLY CAPTURED FINGERPRINT AND USEABLE FOR ALIGNING THE FINGERPRINT IN ONE OR MORE UNAMBIGUOUS ORIENTATIONS AND TRANSLATIONAL FASHIONS — 104

PREPROCESS IMAGE ON HOST PROCESSOR — 105

EXTRACT FEATURES FROM IMAGE ON HOST PROCESSOR — 106

ALIGN FEATURE LOCATIONS OF EXTRACTED FEATURES USING THE PROVIDED LOCATIONS AND OFFSETS TO ORIENT THE SENSED IMAGE IN AT LEAST AN UNAMBIGUOUS MANNER — 107

DETERMINING AT LEAST A PARAMETER ASSOCIATED WITH EACH FEATURE A LOCATION OF WHICH IS PROVIDED FROM THE SMARTCARD — 108

PROVIDING THE AT LEAST A PARAMETER IN A PREDETERMINED ORDER TO THE SMARTCARD — 109

COMPARING THE RECEIVED AT LEAST A PARAMETER WITH PARAMETERS STORED WITHIN THE TEMPLATE TO DETERMINE LIKELIHOOD OF MATCH — 110

IF MATCH IS LIKELY, IDENTIFY OR AUTHORIZE USER — 111

**Figure 11**

```
┌─────────────────────────────────────────┐
│        SENSING A BIOMETRIC IMAGE         │──112
└─────────────────────────────────────────┘
                    │
                    ▼
┌─────────────────────────────────────────┐
│      PREPROCESS IMAGE ON HOST PROCESSOR  │──113
└─────────────────────────────────────────┘
                    │
                    ▼
┌─────────────────────────────────────────────┐
│  EXTRACT FEATURES FROM IMAGE ON HOST PROCESSOR│──114
└─────────────────────────────────────────────┘
                    │
                    ▼
┌─────────────────────────────────────────┐
│     PROVIDE FEATURE DATA TO SMART CARD   │──115
└─────────────────────────────────────────┘
                    │
                    ▼
┌─────────────────────────────────────────┐
│    ON SMART CARD TRANSFORM FEATURE DATA  │──116
└─────────────────────────────────────────┘
                    │
                    ▼
┌───────────────────────────────────────────────────┐
│ PROVIDE TRANSFORMED FEATURE DATA & LOCATIONS TO HOST│──117
└───────────────────────────────────────────────────┘
                    │
                    ▼
┌───────────────────────────────────────────────────┐
│  ALIGN TRANSFORMED FEATURE LOCATIONS USING THE      │
│  PROVIDED LOCATIONS TO ORIENT THE SENSED IMAGE IN AT│──118
│  LEAST AN UNAMBIGUOUS MANNER                        │
└───────────────────────────────────────────────────┘
                    │
                    ▼
┌───────────────────────────────────────────────────┐
│  DETERMINING AT LEAST A PARAMETER ASSOCIATED        │
│  WITH EACH FEATURE A LOCATION OF WHICH IS           │──119
│  PROVIDED FROM THE SMARTCARD                        │
└───────────────────────────────────────────────────┘
                    │
                    ▼
┌───────────────────────────────────────────────────┐
│  PROVIDING THE AT LEAST A PARAMETER IN A            │
│  PREDETERMINED ORDER TO THE SMARTCARD              │──120
└───────────────────────────────────────────────────┘
                    │
                    ▼
┌───────────────────────────────────────────────────┐
│  COMPARING THE RECEIVED AT LEAST A PARAMETER WITH   │
│  PARAMETERS STORED WITHIN THE TEMPLATE TO DETERMINE │──121
│  LIKELIHOOD OF MATCH                                │
└───────────────────────────────────────────────────┘
                    │
                    ▼
┌───────────────────────────────────────────────────┐
│  IF MATCH IS LIKELY, IDENTIFY OR AUTHORIZE USER     │──122
└───────────────────────────────────────────────────┘
```

Figure 12

880

860

Figure 13

840

824

1120

1122

772

774

775

776

Figure 14

778

780

782

784

**EP 1 385 117 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0111577 A

- WO 0184494 A